# EUROPÄISCHE PATENTANMELDUNG

(11) **EP 1 271 375 A2**
(43) Veröffentlichungstag der Anmeldung: **02.01.2003**
(21) Anmeldenummer: 02013300.5
(22) Anmeldetag: 18.06.2002
(51) Int. Cl.: G06F 17/60

(54) **Verfahren und Vorrichtung zur Erfassung und Darstellung der Produkthistorie eines aus Komponenten hergestellten Gerätes**

(30) Priorität: 18.06.2001 DE 10129251
(71) Anmelder: Actebis Holding GmbH, 59494 Soest (DE)
(72) Erfinder: Klauke, Matthias, 59494 Soest (DE); Klotz, Albert, 59494 Soest (DE)
(74) Vertreter: Basfeld, Rainer, Dr. Dipl.-Phys.

(57) **Zusammenfassung**

Verfahren zur Erfassung und Darstellung der Produkthistorie eines aus mindestens einer Komponente bestehenden Gerätes, gekennzeichnet durch folgende Verfahrensschritte: Einbringung von Kundeninformationen in eine Datenbank und Speicherung der Kundeninformationen in der Datenbank auf einem Datenbankserver (300) über ein Netzwerk (302, 304); Einbringung von Kundeninformationen des Gerätes in die Datenbank und Speicherung von Komponenteninformationen des Gerätes in der Datenbank auf dem Datenbankserver (300) über ein Netzwerk (302, 304); Zuordnung der Komponenteninformationen zu den Kundeninformation und/oder Zuordnung der Kundeninformationen zu den Komponenteninformationen; Aufrufen der Kundenund/oder Komponenteninformationen bezüglich eines Geräts auf einem Client (301) des Netzwerks (302, 304); Einbringung von die Produkthistorie des Gerätes betreffenden Informationen auf dem Client (301) des Netzwerks (302, 304) und Verknüpfung mit den aufgerufenen Kunden- und/oder Komponenteninformationen; Rückschreiben des gesamten Datensatzes betreffend die Kundendaten, Komponentendaten und Produkthistoriendaten in die Datenbank auf dem Datenbankserver (300) über das Netzwerk (302, 304).

## Beschreibung

Die vorliegende Erfindung betrifft ein Verfahren zur Erfassung und Darstellung der Produkthistorie eines aus Komponenten hergestellten Gerätes nach dem Oberbegriff des Anspruchs 1 sowie eine Vorrichtung zur Durchführung des Verfahrens sowie ein Computerprogrammprodukt für die Durchführung des Verfahrens auf der Vorrichtung.

Die Erfassung und Auswertung von kundenspezifischen Servicedaten, beispielsweise im Bereich des PC-Groß- und Einzelhandels, ist zu einer überaus wichtigen Komponente im Bereich des Customer-Relationship Management geworden. Insbesondere handelt es sich auch bei sogenannten PC's "von der Stange" um Computersysteme, die im Gegensatz zu den sogenannten Einplatinencomputern aus einem Motherboard und nahezu beliebig vielen und unterschiedlichen Erweiterungsplatinen, sogenannten PC-Cards zusammengesetzt sind. Neben den PC-Karten kann der Endkunde aus einer unüberschaubaren Vielfalt von Massenspeichergeräten, Peripheriegeräten und Bildschirmen auswählen, die darüber hinaus von unterschiedlichen Herstellern angeboten werden.

Für ein Unternehmen, welches den Endkunden beispielsweise vorwiegend mit Computersystemen beliefert, die nach individuellen Bedürfnissen zusammengestellt wurden, ergibt sich ein weitaus größeres Interesse, die Spezifikationen und Zusammenstellung jedes einzelnen Computers verfügbar zu machen, als beispielsweise für ein Unternehmen im Consumer-Electronik-Bereich. Dies gilt ebenfalls für Unternehmen aus anderen Industriebereichen, wie beispielsweise einem Hersteller von Küchengeräten oder Kraftfahrzeugen.

Insbesondere wenn ein Soft- oder Hardwarefehler beim Kunden auftritt, ist es für den konsultierten Servicemitarbeiter wichtig, eine Übersicht über die verwendeten Komponenten zu erhalten, um eine geeignete Diagnose zu stellen. Dabei kann es dem Kunden nicht zugemutet werden, die Spezifikationen seines Computersystems in der von einem Techniker geforderten Weise zu kennen.

Hinzu kommt, dass ein Computerdistributor zumeist über ein umfangreiches Filialennetz verfügt, so dass die Informationen an unterschiedlichen Orten verfügbar sein müssen.

Das Problem der vorliegenden Erfindung liegt somit in der Bereitstellung einer Vorrichtung, eines Verfahrens sowie eines Computerprogramms der eingangs genannten Art, welche es einem Servicemitarbeiter in jeder beliebigen Niederlassung bzw. vor Ort bei den Kunden erlauben, eine umfassende Information über die Spezifikationen eines bestimmten Gerätes zu erhalten.

Die Aufgabe wird hinsichtlich des Verfahrens durch die Merkmale des Anspruchs 1, hinsichtlich der Vorrichtung durch die Merkmale des Anspruchs 13 und hinsichtlich des Computerprogramms durch die Merkmale des Anspruchs 17 gelöst.

Durch die Verwendung eines erfindungsgemäßen netzwerkbasierten Verfahrens zur Erfassung und Darstellung einer Produkthistorie wird es einer Vielzahl von Benutzern erlaubt, über die Ausstattungsmerkmale und die Historie eines Gerätes, wie beispielsweise eines Personal-Computers, einen umfassenden Überblick zu erlangen. Neben Informationen über den Käufer des Gerätes können mit dem Gerät verbundene Aktionen, wie beispielsweise eine Materialanforderung eines Ersatzteils oder eines Reparaturauftrages dargestellt werden. Durch chronologische Darstellung dieser Informationen, verbunden mit den sogenannten Kunden- und Komponenteninformationen, kann ein Servicemitarbeiter in vergleichsweise kurzer Zeit qualifizierte Aussagen über den Zustand, bzw. die technische Beschaffenheit, Reparaturmöglichkeiten etc. abgeben.

Insbesondere die übersichtliche Darstellung der Produkthistorie in einer Produkthistorientabelle ermöglicht dem Benutzer einen umfassenden Überblick bezüglich des Gesamtzustands des betreffenden Gerätes.

Vorteilhafterweise kann mindestens ein Prozess ausgewählt werden, wobei der mindestens eine Prozess in der Produkthistorientabelle dokumentiert wird.

Weiterhin kann der mindestens eine Prozess mindestens eine Aktion auslösen. Hierbei ist es von Vorteil, vorgegebene Aktionen betreffend das Gerät aus einem Drop-Down Menü zur Verfügung zu stellen. Auf diese Weise wird eine differenzierte und eindeutig gegliederte Unterteilung möglich, die zum einen dem Benutzer die Eingabe erleichtert und zum anderen die Vorgehensweise vereinheitlicht.

Bei dem auswählbaren Prozess kann es sich um eine Materialanforderung oder Reparaturanweisung handeln. Insbesondere bei Auslösung einer Materialanforderung ist es vorteilhaft, dass eine Materialauswahltabelle aus einer Komponententabelle erzeugt wird, in welcher die einzelnen Komponenten über zugeordnete Auswahlfelder angewählt werden können und in die Materialauswahltabelle übertragen werden. Hierdurch wird zunächst eine begrenzte und auch übersichtliche Anzahl von Komponenten zur Auswahl gestellt, die in dem Gerät verwendet wurden und somit kompatibel sind. Darüber hinaus wäre es denkbar, die Auswahl mit kompatiblen Komponenten zu erweitern, da entweder die seinerzeit verwendete Komponente gerade nicht oder nicht mehr verfügbar ist.

Vorteilhafterweise kann nach erfolgter Auswahl der Komponenten aus der Materialauswahltabelle eine gesamte Materialbestellliste angezeigt werden, welche an eine Materialbeschaffungsstelle übermittelt wird und in der Produkthistorientabelle dokumentiert und dargestellt wird.

Als besonders vorteilhafte Ausgestaltung der Reparaturanweisung ist eine Spezifizierung hinsichtlich des aufgetretenen Fehlerbildes in Kombination mit einer Handlungsanweisung zur Abstellung des Fehlerbildes vorgesehen. Dabei ist ein Fehlermenü vorgesehen, das derart gegliedert ist, dass ein Fehlerbild durch Anklicken spezifiziert werden kann. Das gleiche gilt für das Auswahlmenü mit den Handlungsanweisungen zur Abstellung des Fehlerbildes.

Nach Auswahl dieser Kombination aus Fehlerbild und Handlungsanweisung wird vorteilhafterweise eine weitere Zeile mit den zuvor genannten Inhalten und unter Hinzufügung weiterer relevanter Daten, wie Auftragsdatum, Bearbeiter etc. in der Produkthistorie erzeugt und eine entsprechende Anweisung an die Reparaturabteilung bzw. einen Reparaturdienst geschickt, wobei auch hier ein bevorzugter Reparaturdienst auswählbar sein kann.

Des weiteren ist vorgesehen, dass Materialanforderung und Reparaturanweisung jeweils mit einem Status versehen werden, der insbesondere über die Produkthistorientabelle einsehbar und veränderbar ist. Durch diese Maßnahme können Aufträge als erledigt gekennzeichnet werden, so dass sie lediglich zu informativen Zwecken in der Produkthistorie verbleiben. Darüber hinaus ist eine Wiedervorlagefunktion vorgesehen, die dem ebenfalls mit der Materialanforderung bzw. Reparaturanweisung vermerkten Bearbeiter gesandt wird.

Das Gerät kann vermittels mindestens eines Kennzeichens identifizierbar sein, insbesondere kann es sich bei dem Kennzeichen um die Seriennummer des Gerätes handeln.

Die Zuordnung der in der Produkthistorientabelle dokumentierten Prozesse zu dem Gerät erfolgt über das Kennzeichen. Diese Zuordnung der Prozesse und / oder Aktionen zu dem jeweiligen Gerät erlaubt eine Auswertung hinsichtlich eines Gerätetyps oder nach Prozesskategorien. Als gemeinsame Relation zwischen den Kundendaten und den Daten des Gerätes kann dabei stets die Seriennummer des Gerätes verwendet werden.

Bei dem Gerät kann es sich um einen Personalcomputer oder an diesen angeschlossenen Peripheriegeräte, insbesondere Drucker, Scanner, Modem, Monitore oder externe Speichermedien aber auch um Haushaltsgeräte, wie eine Waschmaschine handeln.

Eine Vorrichtung für das erfindungsgemäße Verfahren zur Erfassung und Darstellung der Produkthistorie eines aus Komponenten hergestellten Geräts umfasst mindestens einen Datenbankserver zur Bereitstellung einer Datenbank, sowie mindestens einen Client, der über ein Netzwerk mit dem Datenbankserver verbunden ist, wobei das Verfahren auf der Vorrichtung durchgeführt wird. Hierbei kann das Netzwerk beispielsweise das Internet sein. Hierdurch kann eine nahezu unbegrenzte Anzahl von Mitarbeitern Zugriff auf den Datenbankserver nehmen und die eingegebenen Informationen standortunabhängig einsehen und bearbeiten.

Des weiteren können als Clients Personal-Computer bevorzugt werden, die mit einem skriptfähigen Browser ausgestattet sind. JAVA-Script in Kombination mit HTML bietet eine vorteilhafte Möglichkeit zur Aufbereitung der Abfragemasken und Übergaben an die Datenbank via Netzwerk.

Zur Kommunikation über das Netzwerk kann ein Verschlüsselungsalgorithmus verwendet werden, der den unbefugten Zugriff auf übermittelte Daten verhindert.

Es kann ein Computerprogramm mit Programmcodemitteln verwendet werden, um alle Schritte des Verfahrens durchzuführen, wenn das Programm auf der Vorrichtung durchgeführt wird.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: ein Anmeldemenü zur Eingabe von Benutzername und Passwort;
- Fig. 2: ein erstes Hauptmenü für ein erfindungsgemäßes Verfahren;
- Fig. 3: ein Menü zur Eingabe eines Passworts;
- Fig. 4: ein Menü zur Änderung des Passworts;
- Fig. 5: ein zweites Hauptmenü für ein erfindungsgemäßes Verfahren;
- Fig. 6: eine Suchmaske zur Eingabe von Seriennummer und weiteren Suchphrasen;
- Fig. 7: eine Stammdatentabelle und eine Produkthistorientabelle mit beispielhaften Daten eines Personal-Computer;
- Fig. 8: eine Kundeninformationstabelle mit einem Button zur Eingabe von Kundeninformationen;
- Fig. 9: eine Eingabemaske zur Eingabe von Kundeninformationen;
- Fig. 10: ein Aktionsmenü zur Eingabe einer neuen Aktion mit beispielhaftem Eintrag einer Materialanforderung;
- Fig. 11: eine beispielhafte Zeile aus der Produkthistorientabelle nach Eingabe einer Materialanforderung;
- Fig. 12: eine Materialauswahltabelle mit Auswahlmerkern zur Zusammenstellung einer Materialbestellliste;
- Fig. 13: ein Zwischenmenü zur Bestimmung einer Materialauswahl;
- Fig. 14: eine Materialbestellliste zur Übermittlung an eine Materialbeschaffungsabteilung oder einen externen Dienstleister;
- Fig. 15: eine aus einer Materialanforderung generierte Zeile in der Produkthistorientabelle;
- Fig. 16: ein Aktionsmenü zur Eingabe einer neuen Aktion mit beispielhaftem Eintrag einer Reparaturanweisung;
- Fig. 17: ein Fehlerbildmenü und ein Handlungsanweisungsmenü;
- Fig. 18: eine aus einer Reparaturanweisung generierte Zeile in der Produkthistorientabelle;
- Fig. 19: eine schematische Darstellung einer Vorrichtung zur Durchführung eines erfindungsgemäßen Verfahrens;
- Fig. 20: eine schematische Darstellung einer Vorrichtung zur Durchführung eines erfindungsgemäßen Verfahrens;
- Fig. 21: eine Anmeldemaske zur Eingabe von Benutzernamen und Kennwort;
- Fig. 22: eine Maske zur Bearbeitung von Benutzerdaten;
- Fig. 23: eine Suchmaske zur Eingabe einer Seriennummer oder anderer Suchkriterien;
- Fig. 24: eine Stammdatenausgabemaske einer Suchanfrage gemäß Fig. 23;
- Fig. 25: eine Produkthistorientabelle mit Beispielhaften Daten eines Gerätes;
- Fig. 26: eine Komponentendatentabelle eines Gerätes;
- Fig. 27: eine Maske zur Bearbeitung eines Materialanforderungszählers;
- Fig. 28: eine Eingabemaske zur Erfassung von Rückfragen eines Kunden;
- Fig. 29: eine Eingabemaske zur Erfassung von Rückfragen eines Kunden mit beispielhaften Daten gemäß Fig. 28;
- Fig. 30: ein Prozessmonitor mit beispielhaften Daten eines Gerätes und einer Auswahlmaske zur Auswahl von Fehlerbild und Handlungsanweisung;
- Fig. 31: Prozessmonitor gemäß Fig. 30 mit einer Materialauswahltabelle und einer Materialbestellliste;
- Fig. 32: eine Eingabemaske zur Auslösung eines Prozesses Materialanforderung;
- Fig. 33: Prozessmonitor gemäß Fig. 30 mit einem beispielhaften Prozess in einer detaillierten Darstellung;
- Fig. 34: eine Suchmaske zur Eingabe von Suchkriterien in einem Menü Auftragsübersicht;
- Fig. 35: eine Suchmaske zur Eingabe von Suchkriterien in einem Menü Buchhaltung;
- Fig. 36: eine Ergebnisliste der Suchanfrage gemäß Fig. 35.

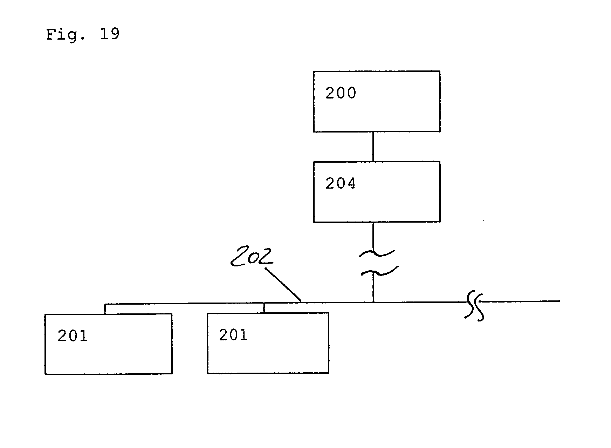

Zunächst wird auf Fig. 19 Bezug genommen.

Das erfindungsgemäße Verfahren kann auf einem elektronischen Datenverarbeitungssystem, umfassend mindestens einen Datenbankserver (200) und mindestens einen Client (201) durchgeführt werden, wobei Datenbankserver (200) und Client (201) über ein Netzwerk (202) zum Datenaustausch miteinander verbunden sind. Bei dem Datenbankserver kann es sich um einen handelsüblichen Computer handeln, der neben einem Betriebssystem eine Datenbanksoftware zum Aufbau einer relationalen Datenbankstruktur, sowie eine Schnittstelle umfasst, die für eine Abfrage bzw. Speicherung von Daten in der Datenbank geeignet ist.

Bei den verwendeten Clients (201) kann es sich um Personal-Computer handeln, umfassend Eingabegeräte wie Mouse und Tastatur, sowie Ausgabegeräte wie Bildschirm und Drucker, wobei hier neben einem Betriebssystem ein Browser-Programm vorgesehen ist, welches zur Abfrage, Änderung und zum Rückschreiben von Daten aus der Datenbank geeignet ist.

Der Datenaustausch mit einer beliebigen Anzahl von angeschlossenen Clients (201) kann hier über das Internet erfolgen. Denkbar ist jedoch ebenfalls eine Intranetlösung, wobei die Grenzen hier fließend sind und sich beispielsweise lediglich durch die erzielten Datenübertragungsraten unterscheiden.

Als zusätzliche Sicherungsmaßnahme kann zwischen dem Datenbankserver (200) und dem externen Netz, beispielsweise dem Internet, ein Webserver (203) vorgesehen sein, der als Sicherheitsinstanz dient und die Datenbank vor unerlaubten Zugriffen schützt.

Als zusätzliche Sicherungsmaßnahme kann zwischen dem Datenbankserver 200 und dem externen Netz, beispielsweise dem WAN 204, eine Firewall 203 vorgesehen sein, die als Sicherheitsinstanz dient und die Datenbank vor unerlaubten Zugriffen schützt.

Die nachfolgenden Tabellen und Masken werden beispielsweise auf dem Monitor der Clients dargestellt.

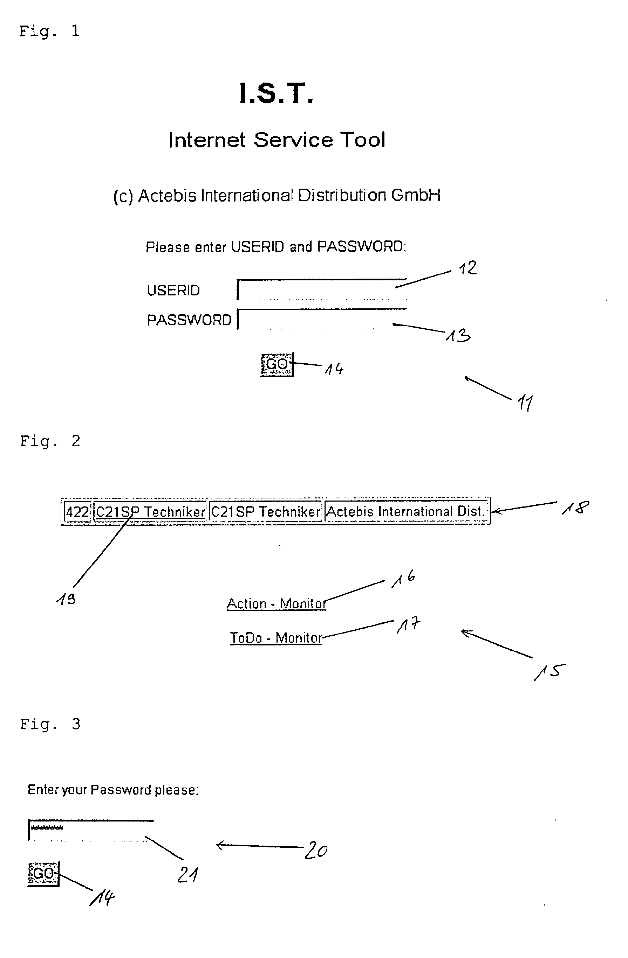

Ein erfindungsgemäßes Verfahren zur Erfassung und Darstellung einer Produkthistorie umfasst zunächst eine Anmeldemaske 11, mit den Eingabefeldem "UserID" 12 und "Password" 13, sowie einen Eingabebestätigungsbutton 14, wie in Fig. 1 dargestellt. An dieser Stelle muss sich der Benutzer durch Kombination aus "UserID" 12 und "Password" 13 identifizieren, um Zugriff auf die Datenbank zu erhalten.

Nach erfolgter Anmeldung wird das Hauptmenü 15 aufgerufen, das eine Systemfeedbackzeile 18 enthält, welche die in dem System gespeicherten Anmelde-Daten ausgibt, dargestellt in Fig. 2. Darüber hinaus sind drei Links (Verknüpfungen) vorgesehen, die den Benutzer durch Anklicken in ein weiteres Menü entsprechend der Linkbezeichnung führen. Dabei ist ein Link "Action - Monitor" 16, ein Link "ToDo - Monitor" 17 sowie ein Link "Help" 32 verfügbar. Ein weiterer Link 19 ist in der Systemfeedbackzeile 18 vorgesehen, der eine Änderung des Passwortes 13 zulässt. Durch Anklicken des Links 19 wird der Benutzer in ein Abfragemenü 20 geleitet, um in ein weiteres Passwortmenü 22 nach Eingabe des alten Passworts 21 zu gelangen, wie in Fig. 3 dargestellt.

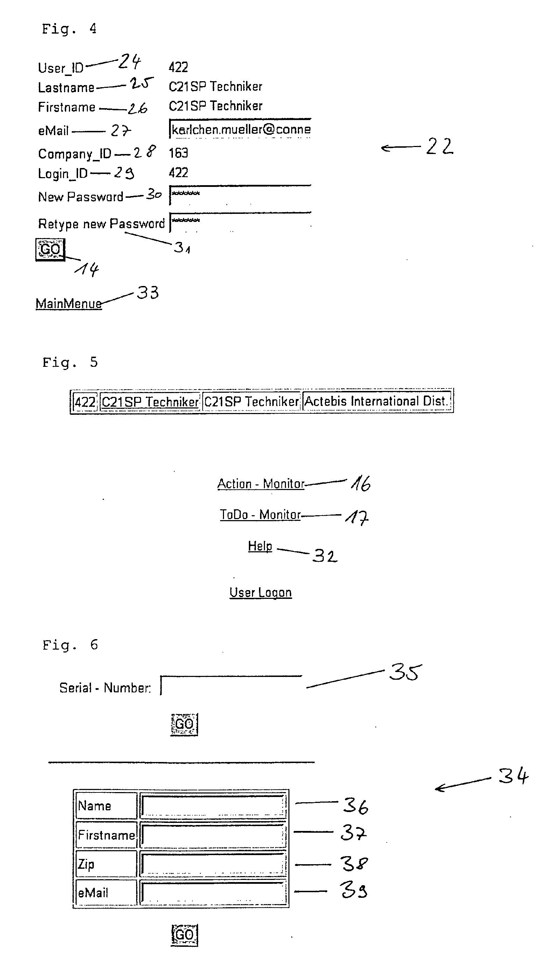

Das in Fig. 4 dargestellte Passwortmenü 22 umfasst im wesentlichen die Ausgabefelder "UserID" 24, "Lastname" 25, "Firstname" 26, "Company_ID" 28, "Login_ID" 29, die zur Ausgabe der aktuellen Benutzerinformationen dienen. Daneben existieren Eingabefelder "eMail" 27, "New Password" 30, "Retype new Password" 31 und ein Link "MainMenue" 33 zum Wechsel in das Hauptmenü 15. Nach Eingabe und Verifizierung des neu gewählten Passworts durch den Benutzer kann die Eingabe durch einen Mausklick auf den Bestätigungsbutton 14 bestätigt werden.

In dem in Fig. 5 dargestellten Hauptmenü 15 stehen die bereits vorgestellten Links "Action - Monitor" 16, "ToDo - Monitor", 17, "Help" 32 zur Verfügung, die durch Anklicken die gewünschte Seite aufrufen.

Durch Anklicken des "Action - Monitors" 16, wird eine zweigeteilte Eingabemaske 34 aufgerufen, die als Suchmaske fungiert und die Eingabe von im Regelfalle UND-verknüpften Suchparametern zulässt, wie in Fig. 6 dargstellt.

Als Eingabefelder für Suchparameter sind hier "Serial - Number" 35, "Name" 36, "Firstname" 37, "Zip" 38 und "eMail" 39 vorgegeben, über die Suchanfragen bezüglich Seriennummer, Name, Vorname, Postleitzahl und eMail-Adresse an die Datenbank generiert werden können.

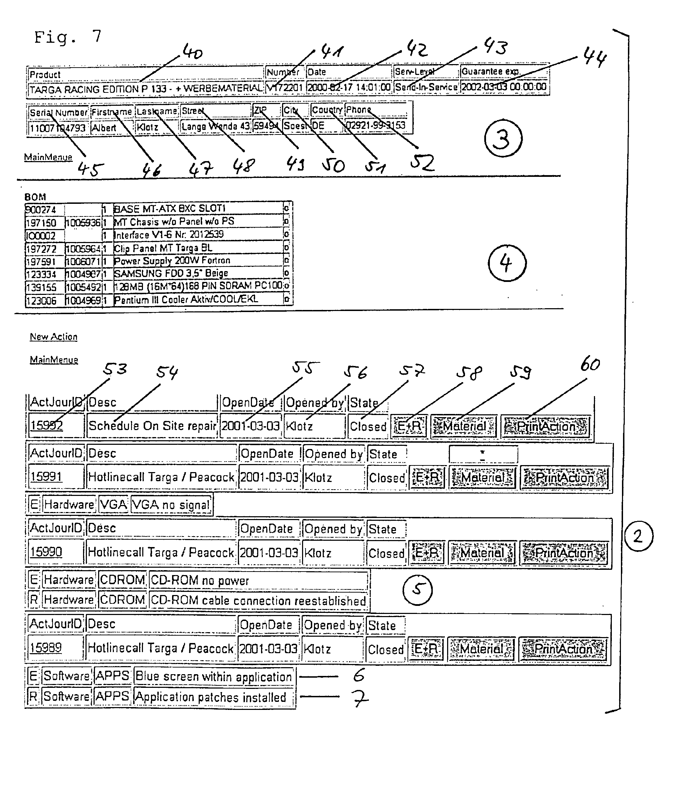

Durch Eingabe einer zu suchenden Zeichenfolge und Bestätigung durch die Bestätigungstaste 14 wird eine Suchanfrage abgeschickt, wobei die Datenbank bei Übereinstimmung den korrespondierenden Datensatz zurückgibt und die Informationen des Datensatzes in den dafür vorgesehenen Feldern einer Stammdatenausgabemaske 2 und einer Produkthistorienmaske 5 angezeigt werden, welche in Fig. 7 dargestellt werden.

Die Stammdatenmaske 2 umfasst die Ausgabefelder "Product" 40, "Number" 41, "Date" 42, "Guarantee expired" 44, "Serial Number" 45, "Firstname" 46, "Lastname" 47, "ZIP" 49, "City" 50, "Country" 51 und "Phone" 52, die zusammen die Kundeninformationen 3 bilden und Informationen über die Produktbezeichnung, laufende Nummer, Datum des Verkaufs, Ablauf der Garantiezeit, Seriennummer, Vor- und Nachname des Kunden, Postleitzahl, Stadt, Land und Telefonnummer des Kunden bereitstellt. Des weiteren ist eine Komponenteninformationstabelle 4 vorgesehen, welche die in dem Personal-Computer verwendeten Komponentenbezeichnungen incl. Mengenangaben und Bestellnummern ausgibt.

In der Produkthistorienmaske 5 schließlich werden die, falls zum Zeitpunkt der Abfrage bereits vorhandenen, Informationen zur Produkthistorie in tabellarischer Form ausgegeben. Im einzelnen enthält die dort angezeigte Tabelle eine laufende Nummer in der Spalte "ActJourID" 53, "Desc" 54, "OpenDate" 55, "Opened by" 56, "State" 57, sowie die Buttons zur Auslösung eines Vorgangs "E+R" 58, "Material" 59 zur Materialbeschaffung, sowie die Druckausgabeanforderung "Print Action" 60. Die "ActJourID" 53 ist einen laufende Ordnungsnummer zur Zuordnung eines bestimmten Vorgangs, das Feld "Desc" 54 beinhaltet eine Beschreibung des Vorgangs, die Felder "OpenDate" 55 und "Opened by" 56 enthalten Angaben bezüglich des Eingabedatums bzw. des veranlassenden Benutzers. Kombiniert werden diese Informationen mit einem Status "State" 57, der Auskunft darüber erteilt, ob der Vorgang bereits abgeschlossen ist oder ob es sich um einen in Schwebe befindlichen Vorgang handelt.

Die Abkürzung des Buttons "E+R" 58 ist aus dem englischen übernommen und bedeutet so viel wie "Fehler und Fehlerbehebungsmaßnahme" (Error + Result) und löst eine Reparaturanfrage aus.

An die zuvor genannten Ausgabefelder schließt sich eine mehrteilige Ausgabezeile für das Fehlerbild 6 und die Handlungsanweisung 7 an, die seinerzeit von einem Benutzer eingegeben bzw. ausgewählt worden ist.

Dabei ist die Ausgabezeile für das Fehlerbild 6 mindestens dreiteilig aufgebaut, so dass eine Fehlergliederung von Oberbegriff zu Fehlerdetail möglich ist. Dies gilt ebenfalls für die Handlungsanweisungszeile 7.

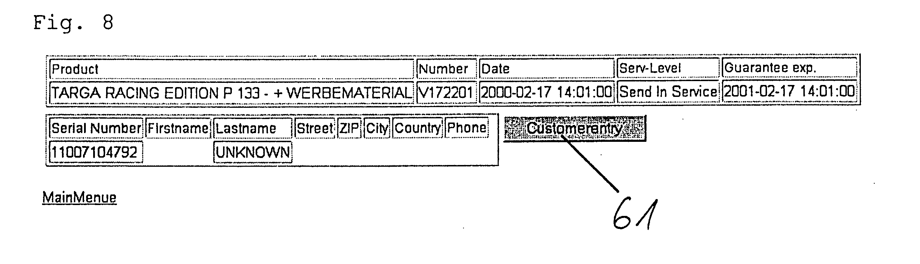

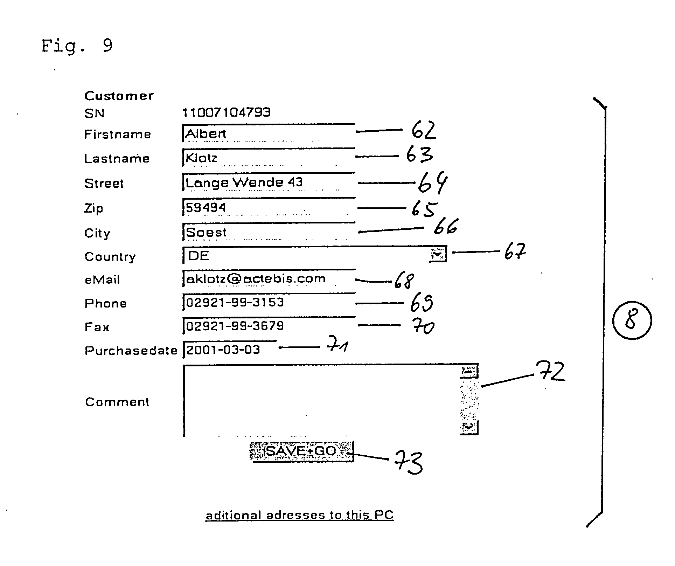

Sind bei den Daten des aufgerufenen Personal-Computers noch keine bzw. unvollständige Stammdaten eingegeben, so besteht die Möglichkeit über einen Button "Customerentry" 61 entsprechende Stammdatenfelder aufzufüllen bzw. abzuändern, wie in Fig. 8 dargestellt. Durch Anklicken gelangt der Benutzer in eine in Fig. 9 dargestellte Eingabemaske 8, die Eingabefelder "Firstname" 62, "Lastname" 63, "Street" 64, "ZIP" 65, "City" 66, "Country" 67, "eMail", "Phone" 69, "Fax" 70, "Purchasedate" 71 sowie ein mehrzeiliges Feld "Comment" 72 umfasst. Besondere Bedeutung kommt dem Feld "Purchasedate" 71 zu. Das Kaufdatum des Endkunden, belegt durch die Kaufquittung, definiert den Anspruchszeitraum für die Garantieleistungen. Ist dieses Feld leer, so wird das Feld "Guarantee exp" 44 mit einem Datum gefüllt, welches aus dem Herstellungsdatum des Personal-Computers berechnet wird.

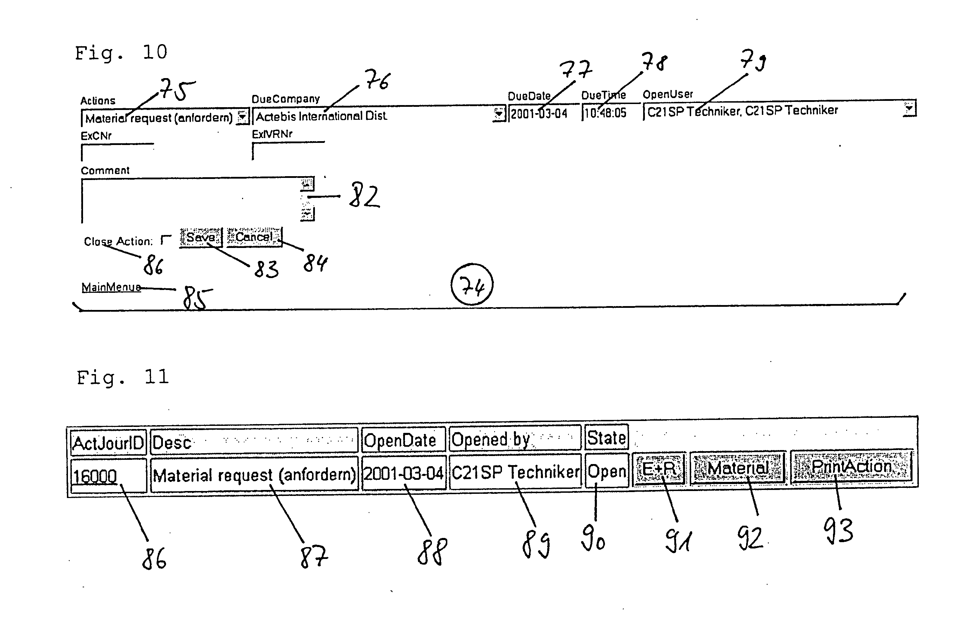

Die Stammdatenmaske 2 stellt weiterhin einen Link "New Action", der den Benutzer nach dem Anklicken in ein Aktionsmenü 74 (Fig. 10) führt.

Das in Fig. 10 dargestellte Aktionsmenü 74 umfasst die Eingabefelder "Actions" 75, "DueCompany" 76, "DueDate" 77, "DueTime" 78, "OpenUser" 79, "ExCNr" 80, "ExIVRNr" 81, "Comment" 82, "Save" 83, "Cancel" 84 "MainMenue" 85 und der Statusbutton "Close Action" 86.

Dabei ist zunächst das Eingabefeld "Actions" 75, welches als sogenanntes "Drop Down Menü" ausgelegt ist, relevant für die Definition einer vorgegebenen Aktion.

Das Feld "DueCompany" 76 ist ebenfalls als "Drop Down Menü" gestaltet und bietet eine Auswahl an Firmen oder Abteilungen, die zur Ausführung der gewählten "Action" 75 in Frage kommen. Die Felder "DueDate" 77 und "DueTime" 78 werden automatisch ausgefüllt und enthalten Datum und Uhrzeit der Aktionseingabe.

Der Statusbutton "Close Action" kann entweder gesetzt oder nicht gesetzt werden und markiert im gesetzten Zustand eine abgeschlossene Aktion, die keiner weiteren Bearbeitung mehr bedarf.

Wie bereits oben angedeutet, kommt der Auswahl einer Aktion aus dem Menü "Actions" 75 eine wesentliche Bedeutung zu. Hier kann beispielsweise die Aktion "Material request (anfordern)" ausgewählt werden, wodurch ein Materialanforderungsauftrag für die Beschaffung einer noch zu spezifizierenden Komponente eines Personal-Computers generiert wird und an die entsprechende Beschaffungsabteilung gesandt wird. Bestätigt wird die vorgesehene Aktion zunächst durch einen "Save" 83 Button, wobei nach dem Anklicken eine neue Historienzeile mit den Feldern "ActJourID" 86, "Desc" 87, "OpenDate" 88, Opened by" 89, "State" 90 und den Buttons "E+R" 91, "Material" 92 und "PrintAction" 93 erzeugt wird, die in der Produkthistorientabelle 5 angezeigt werden kann, dargestellt in Fig. 11.

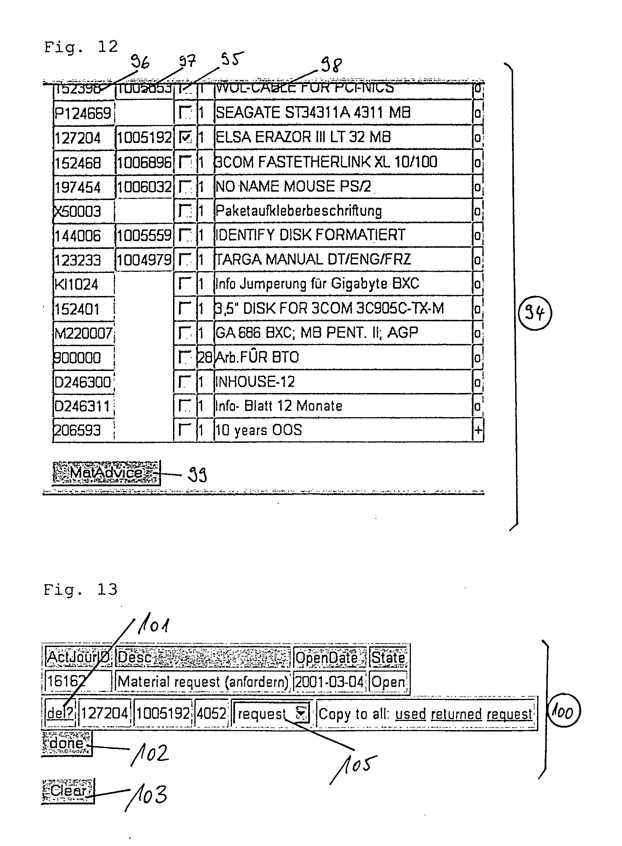

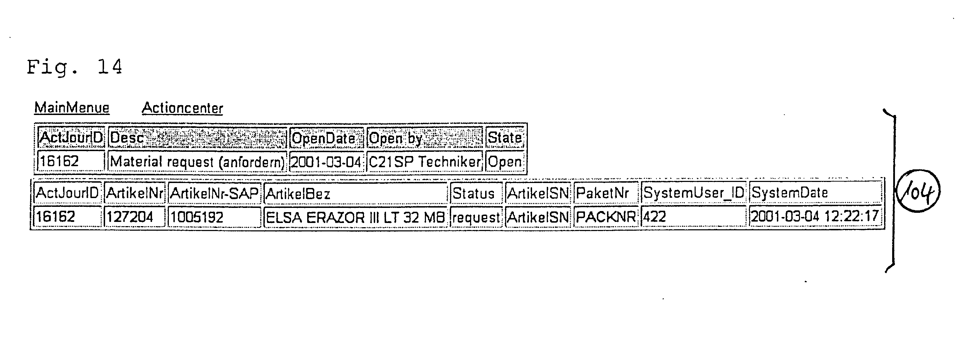

An dieser Stelle kann durch Anklicken des Buttons "Material" 92 eine Materialauswahltabelle 94 (Fig. 12) aufgerufen werden, die die Spalten für interne Identitätsnummern 96, 97, eine Spalte für Auswahlfelder 95, eine Spalte für zugeordnete Kurzbezeichnungen 98 und einen Button "MatAdvice" 99 für den Abschluss der Materialauswahl und Übergang zu einem Zwischenmenü 100 umfasst, dargestellt in Fig. 13, welches neben einer kurzen Zusammenfassung der Bestellung, den Benutzer durch einen Button "del?" zur Löschung einzelner Bestellzeilen oder durch einen Button "Clear" 103 zur Löschung der gesamten Materialanfrage befähigt. Darüber hinaus ist über ein "Drop Down Menü" "Status" 105 ein der Materialanfrage anhaftender Status eingebbar. Als Status für die Materialbeschaffung wären denkbar, "request": vom Techniker angefordert, "proposed": von der Hotline vorgeschlagen für Technikereinsatz, "booked": von der Materialwirtschaft gebucht, "sended": wurde von der Materialwirtschaft versendet, "used": wurde für Reparatur benutzt und "returned": wurde an die Materialwirtschaft zurückgesendet.

Ist der Benutzer mit der Materialanfrage einverstanden, kann diese durch Anklicken eines Buttons "done" 102 in das System eingebracht werden, welches durch Anzeigen der kompletten Materialbestellliste 104 abgeschlossen wird, wie in Fig. 14 dargestellt.

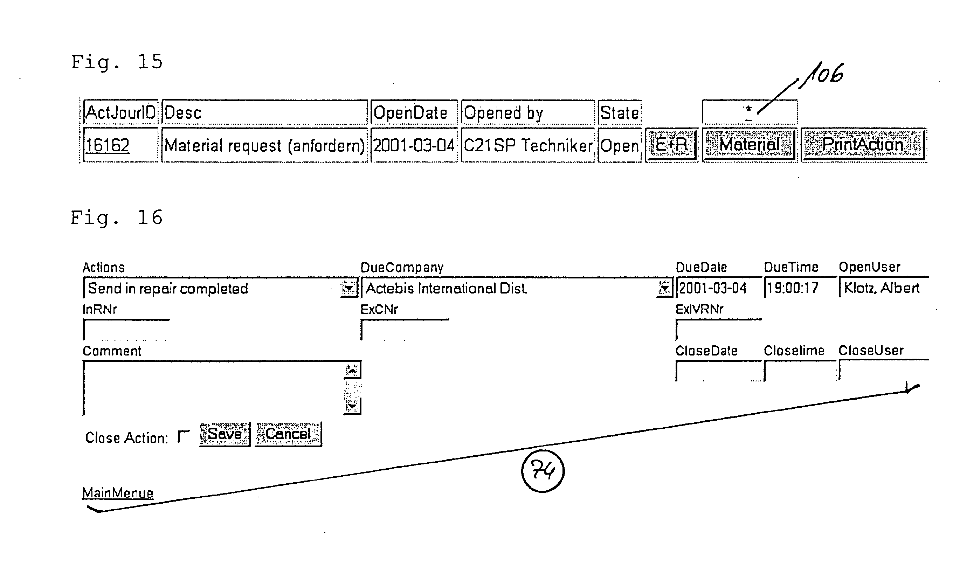

Wie bereits oben angesprochen, wird die Materialbestellliste in die Produkthistorientabelle 5 übertragen und ist dementsprechend über den oben beschriebenen Weg einsehbar, wobei die jeweilige Historienzeile um einen Button "*-" 106 erweitert ist, der ein Einsehen des jeweiligen Materialstatus ermöglicht, dargestellt in Fig. 15. Die gemäß diesem Procedere entstandenen Materialbeschaffungsaufträge können von der Materialbeschaffungsstelle abgerufen werden bzw. werden als Teil einer Gesamtbestellung in regelmäßigen Abständen ausgegeben.

Eine weitere auslösbare Aktion ist eine Garantie- bzw. Vor-Ort-Reparatur. Ausgehend von dem Aktionsmenü 74, kann als weitere Aktion aus dem Eingabefeld "Actions" 75 die Aktion "Send in repair completed" oder "On Site Repair completed" von dem Benutzer eingegeben werden (Fig. 16).

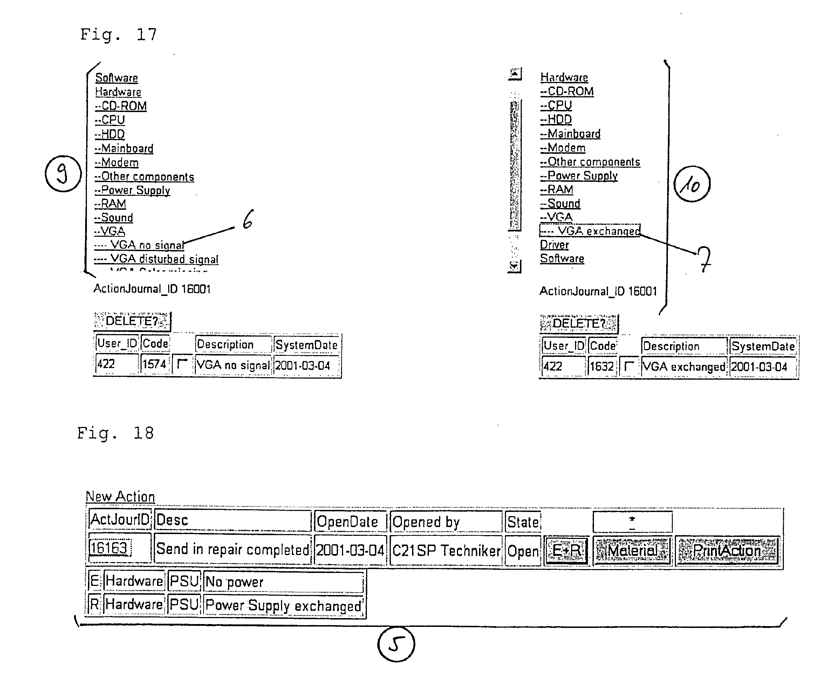

In diesem Falle müssen die Felder "DueDate" 77 und "DueTime" 78 von dem Benutzer ausgefüllt werden, wobei ersteres dem Datum und zweiteres der Uhrzeit entspricht, wann die Reparatur durchgeführt worden ist. Nach Bestätigung der Eingabe durch Anklicken des "Save" Buttons 83 wird eine Zeile in der Produkthistorientabelle erzeugt, die Informationen über die ausgewählte Aktion, hier über einen "Send in repair completed" anzeigt, dargestellt in Fig. 18. Spezifiziert werden muß die Zeile durch die Angabe des von dem Benutzer ausgewählten Fehlerbildes und der von dem Benutzer ausgewählten Handlungsanweisung zur Abstellung des Fehlers. Durch Anklicken des "E+R" Buttons 91 wird ein Fehlermenü 9 und ein Handlungsanweisungsmenü 10 dargestellt, wobei die Fehlerbilder und die Handlungsanweisungen baumstrukturartig aufgebaut sind und die Verästelungen durch Anklicken der jeweiligen Oberbegriffe sichtbar und auch ausgewählt werden können, wie in Fig. 17 dargestellt. Durch Anklicken eines gewünschten Fehlerbildes und der bevorzugten Handlungsanweisung, werden die Fehlerbilder 6 und Handlungsanweisungen 7 als zusätzliche Zeilen der Produkthistorientabelle hinzugefügt.

Neben den oben genannten Angaben, enthält die Zeile ebenfalls die Spalte "ActJourID", welche einen Zahlenlink umfasst, der durch Anklicken den Status der Reparatur von "open" auf "close" setzt, um die Reparatur als abgeschlossen zu klassifizieren und sie berechnungswürdig an einen Auftraggeber zu schicken.

Auch diese Angaben werden in die Produkthistorientabelle 5 entsprechend aufgenommen.

Grundsätzlich werden die hier beschriebenen Aktionen oder auch Handlungsanweisungen in entsprechender Form tabellarisch aufgearbeitet und an die geeigneten Stellen verschickt. Beispielswiese werden die Materialbeschaffungsaufträge entsprechend an die innerbetrieblichen Materialbeschaffungsstellen geschickt, dort ausgeführt und die entsprechende Statusänderung vorgenommen. Denkbar ist ebenfalls die Weiterleitung der Handlungsanweisungen an externe Dienstleister bzw. Lieferanten.

Insbesondere Daten, die während des Lebenszyklus eines Gerätes erfasst werden, das aus einer oder mehreren Komponenten besteht, dienen der Prozesssteuerung, Analyse und Ablaufüberwachung innerhalb des erfindungsgemäßen Verfahrens. Voraussetzung für dieses Verfahren ist ein eindeutiges Kennzeichen, anhand dessen jedes Gerät identifizierbar ist. Das eindeutige Kennzeichen kann z.B. die Seriennummer eines Gerätes sein. Das eindeutige Kennzeichen wird auf Datenbankebene innerhalb von Tabellen als sogenannter Primärschlüssel verwendet. Dieser Primärschlüssel muss für jede Tabelle auf Datenbankebene eindeutig sein, um die Datensätze der einzelnen Tabellen eindeutig identifizieren zu können, die ausgelesen, angelegt, geändert oder gelöscht werden sollen.

Das erfindungsgemäße Verfahren sieht vor, dass durch einen Prozess, der in Form einer Modifikation eines Datensatzes in einer Tabelle auf Datenbankebene ausgeführt wird, dessen Auslösung von einer oder mehreren definierten Bedingungen abhängig ist, dem vorliegen von Datensätzen in einer oder mehreren Tabellen, einer oder mehrere Folgeprozesse ausgelöst werden, die in Form einer Modifikation eines oder mehrerer Datensätze in einer oder mehreren Tabellen auf Datenbankebene ausgeführt werden, die parallel ablaufen können. Der initiierende Prozess wird hinsichtlich der Erfüllung der Bedingungen geprüft, bevor Folgeprozesse ausgelöst werden können. Diese Folgeprozesse können untereinander Abhängigkeiten aufweisen, dergestalt, dass das Abschließen aller voneinander abhängigen ausgelösten Folgeprozesse erforderlich ist, um diese Prozesskette zu beenden.

Die durch die Prozesskette hervorgerufenen Vorgänge und Änderungen sind stets einem durch sein eindeutiges Kennzeichen definierten Gerät zugeordnet. Alle für dieses Gerät ausgelösten Prozesse und die damit verbundenen Änderungen an den Daten dieses Gerätes werden in einer der Datenerfassung zugrunde liegenden Datenbank dokumentiert.

Weiterhin können durch einen Prozess eine vorangegangene Prozesskette oder Teile davon unter Berücksichtigung der Abhängigkeit einzelner Prozesse voneinander rückgängig gemacht werden.

Der Aufbau der Prozessstruktur folgt der einer umgekehrten Baumstruktur, ein Prozess kann im Rahmen seiner Parameter eine beliebige Anzahl nachfolgender Prozesse auslösen, die ihrerseits weitere Prozesse nach sich ziehen können. Der Aufbau solcher Prozessketten soll die Steuerung der Vielzahl der Prozesse vereinfachen und übersichtlicher gestalten.

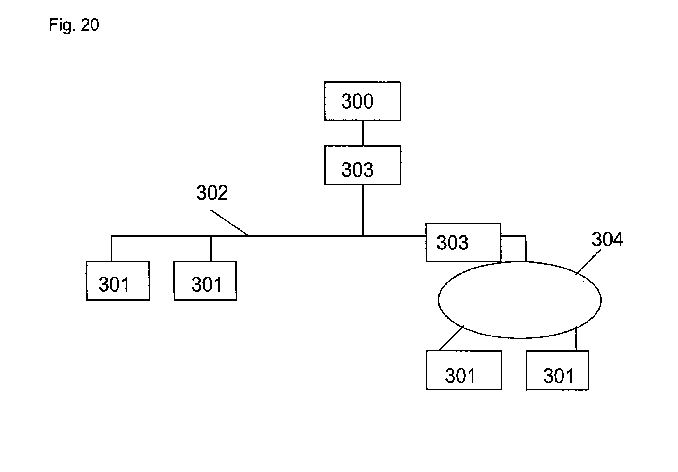

Eine detaillierte Beschreibung dieser Ausführungsform einer Vorrichtung zur Durchführung des erfindungsgemäßen Verfahren auf einem Datenverarbeitungssystem wird nachfolgend beschrieben. Fig. 20 stellt ein Datenverarbeitungssystem dar, das mindestens einen Datenbankserver 300 und mindestens einen Client 301 umfasst, wobei der Datenbankserver 300 und der Client 301 über ein Netzwerk, insbesondere über ein LAN (Local Area Network) 302 und / oder ein WAN (Wide Area Network) 304 und / oder ein Internet zum Datenaustausch miteinander verbunden sind. Bei dem Datenbankserver 300 kann es sich um einen handelsüblichen Computer handeln, der neben einem Betriebssystem eine Datenbanksoftware zum Aufbau einer vorzugsweise relationalen Datenbankstruktur, sowie Schnittstellen umfasst, die zur Verwaltung von Daten in der Datenbank auf dem Datenbankserver 300 geeignet sind. Des weiteren ist es möglich, über Schnittstellen mit anderen Applikationen und / oder Datenbanken zu kommunizieren.

Bei den verwendeten Clients 301 kann es sich um Personal-Computer handeln, umfassend Eingabegeräte wie Maus und Tastatur, sowie Ausgabegeräte wie Bildschirm und Drucker, wobei hier neben einem Betriebssystem ein Browser-Programm oder eine Anwendungssoftware vorgesehen ist, die zu der Darstellung der von dem Datenbankserver 300 übertragenen Daten aus der Datenbank geeignet ist.

Der Datenaustausch mit einer Mehrzahl von angeschlossenen Clients 301 kann sowohl über das WAN 304, als auch über das LAN 302 erfolgen. Der Zugriff auf den Datenbankserver 300 und somit auf die Datenbank über das WAN 304 ermöglicht es, von jedem beliebigen Ort aus, über ein Netzwerkprotokoll mit der Datenbank zu kommunizieren. Um die Kommunikation über das WAN 304 oder Internet zwischen den Clients 301 und dem Datenbankserver 300 zugriffssicher auszuführen, kann eine Verschlüsselung der übertragenen Daten vorgesehen werden.

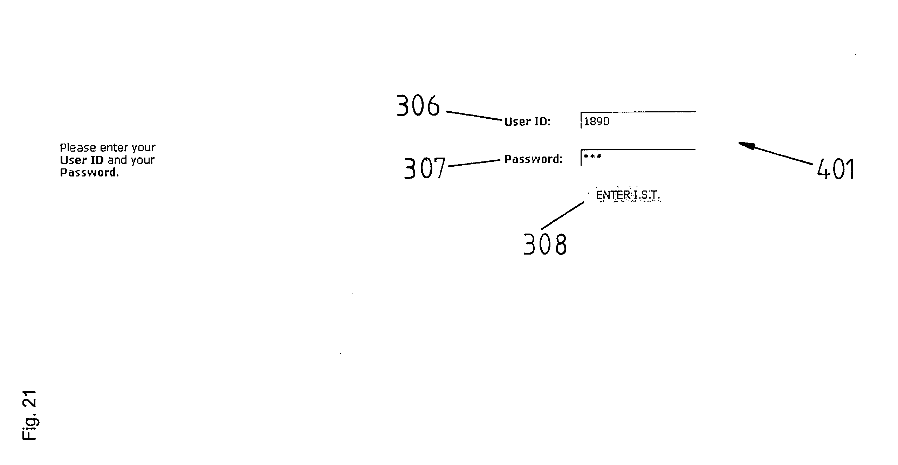

Zur Herstellung einer Verbindung mit dem Datenbankserver 300 über das Netzwerkprotokoll wird beispielsweise auf dem Client 301 ein skriptfähiger Internetbrowser gestartet und in der Adressleiste die Adresse (URL) des Zielsystems, des Datenbankservers oder eines davor geschalteten Webservers, eingegeben. Wie in Fig. 21 dargestellt, erscheint bei einem erfolgreichen Verbindungsaufbau eine Anmeldemaske 401, die zu der Eingabe von einem Benutzernamen 306 eines Anwenders, und einem zugehörigen Kennwort 307 auffordert. Nach erfolgter Eingabe der Daten wird der Vorgang des Einloggens durch die Betätigung eines Betätigungsbuttons 308 ausgelöst.

Es kann ein Berechtigungskonzept vorgesehen werden, dass den Anwendern, die aus verschiedenen Bereichen eines oder mehrerer Unternehmen stammen und auf die Datenbank zugreifen können, Berechtigungen in Form von Rollen zuweist. Bei den einzelnen Rollen wird auf die jeweilige Funktion des Anwenders abgestellt. Ein unternehmensübergreifender Einsatz des Verfahrens kann erfordern, dass den jeweiligen Mitarbeiter der einzelnen Unternehmen der Zugriff auf Daten der anderen Unternehmen unmöglich ist. Ebenso kann innerhalb des Unternehmens eine Differenzierung der Zugangsmöglichkeiten der einzelnen Mitarbeiter zu den Daten erforderlich sein.

Um dies zu erreichen, können z.B. den einzelnen Unternehmen eine oder mehrere Rollen zugewiesen werden, die es dessen Mitarbeitern erlauben, nur die Daten des eigenen Unternehmens einzusehen, und dies ebenfalls nur entsprechend ihrer Aufgabe und Funktion innerhalb des Unternehmens. Der Aufbau der Rollenstruktur kann der einer umgekehrten Baumstruktur entsprechen. Ausgehend von einem Unternehmen können die Rollen nach unten hin immer feiner bis auf die Mitarbeiterebene verästelt werden.

Mit der Anmeldung wird dem Anwender eine von der Datenbank mit diesem Benutzernamen verbundene Rolle zugewiesen. Die dem Anwender zugewiesene Rolle autorisiert diesen zum Zugang zu dem System und zu der Verwendung aller dargestellter Menüpunkte. In Abhängigkeit von dem Umfang der Berechtigungen, die einer Rolle zugewiesen sind, werden die Menüpunkte, für die eine entsprechende Berechtigung nicht vorliegt, ausgeblendet.

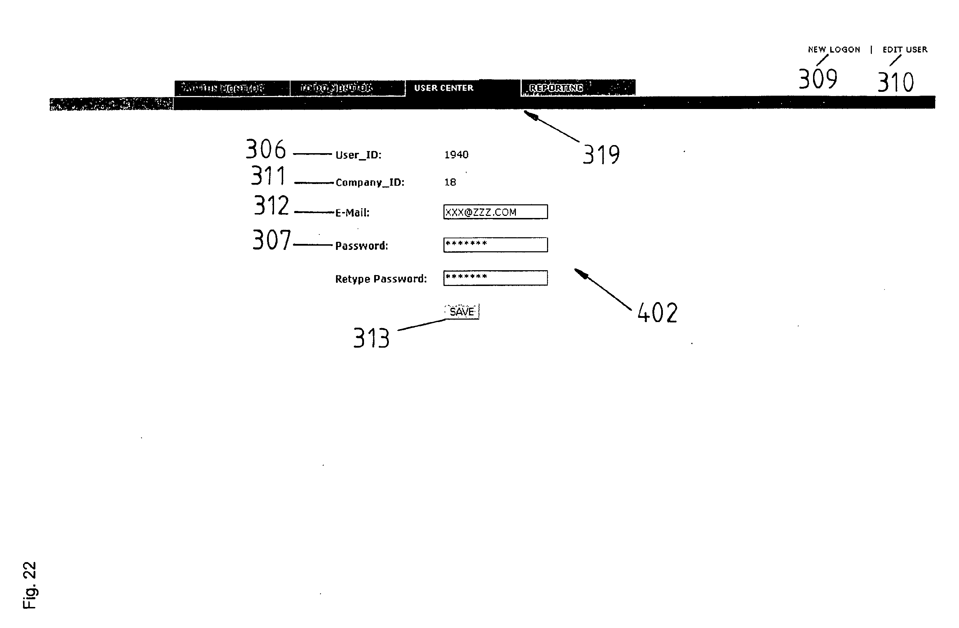

Nach erfolgreicher Anmeldung präsentiert sich dem Anwender eine in mehrere Bereiche gegliederte Arbeitsoberfläche (Browserfenster), wie in Fig.22 dargestellt. In einem oberen Bereich befindet sich in Form von horizontal angeordneten Karteireitern eine Hauptmenüleiste 319. Diese ist nach Funktionen und / oder Aufgaben gegliedert. Die Hauptmenüleiste 319 ist auch bei einem Wechsel in ein anderes Menü präsent. Es wird somit bei einem Menüwechsel das bestehende Browserfenster nicht verlassen, bzw. ein neues Browserfenster geöffnet, sondern nur der Inhalt des Browserfensters wird entsprechend des gewählten Menüs neu aufbereitet.

Oberhalb der Menüleiste sind zwei Links vorgesehen, ein Link Neuanmeldung 309 und ein Link Benutzerverwaltung 310. Der Link Neuanmeldung 309 führt zurück zu der Anmeldemaske 401 und ermöglicht eine erneute Anmeldung mit einem anderen Benutzernamen 306. Der Link Benutzerverwaltung 310 verweist auf eine Maske 402, der Informationen über den angemeldeten Anwender, z.B. den Benutzernamen 306, eine Firmenkennung 311 oder eine E-Mail-Adresse 312 zu entnehmen sind. Sowohl bei dem Benutzernamen 306 als auch bei der Firmenkennung 311 kann es sich um alphanumerische Zeichen handeln.

Der Link Benutzerverwaltung 310 bietet dem Anwender die Möglichkeit sein Kennwort 307 und seine E-Mail-Adresse 312 jederzeit zu ändern, während die Angaben zum Benutzernamen 306 und der Firmenkennung 311 durch den Anwender in dieser Maske 402 nicht veränderbar sind. Alle erfolgten Änderung müssen über einen Betätigungsbutton 313 beendet werden, um die getätigten Eingaben zu speichern.

Ein links von der Hauptmenüleiste 319 liegender Bereich umfasst Informationsund Hilfe-Links 314. Die Auswahl dieses Links 314 eröffnet ein neues Fenster im Browser. In diesem Fenster wird in Abhängigkeit von dem gewählten Menüpunkt eine mehrsprachige, kontextbezogene Hilfe angeboten.

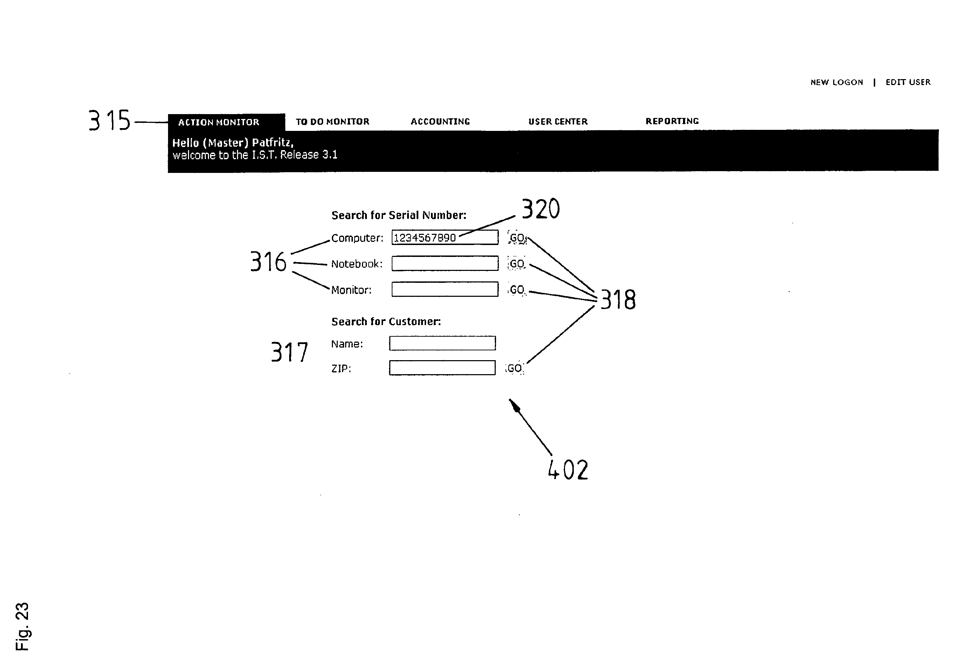

Ein Bereich unterhalb der Hauptmenüleiste 319 dient der Darstellung von Eingabemasken. Eine einem Menüpunkt Prozessmonitor 315 zugeordnete Suchmaske 403 wird durch in Kategorien unterteilte Eingabefelder gebildet, wie in Fig. 23 dargestellt. Eine Kategorie bildet die Suche anhand einer einzugebenden Seriennummer 320, eine weitere Kategorie ist die Suche anhand eines einzugebenden Namens in Verbindung mit einer zugehörigen Postleitzahl. Alternativ kann für eine Suchanfrage als Suchkriterium z.B. der Produktname oder der Kundename vorgesehen werden.

Die Suche anhand der Seriennummer 320 wird durch eine Geräteklassifizierung eingegrenzt. In dem vorliegenden Ausführungsbeispiel erfolgt die Klassifizierung z.B. aufgrund der Seriennummer 320 eines Computers, eines Notebooks oder eines Monitors. Hierfür sind separate Felder 316 für die Eingabe der Seriennummer 320 vorgesehen. Für die Suche anhand der Seriennummer 320 ist das Ausfüllen nur eines der dargestellten Eingabefelder erforderlich. Die Suchmaske 403 ermöglicht ebenfalls die Neuerfassung von Geräten, wenn die Suche mit einer eingegebenen Seriennummer 320 kein Resultat erbrachte. Bei der Neuerfassung des Gerätes kann eine Klassifizierung entsprechend der Gerätegattung erfolgen. Die Erfassung der geräterelevanten Daten kann in einer nicht dargestellten Maske, die dem Prozessmonitor zugeordnet ist, erfolgen. In dieser Maske können Daten wie z.B. Hersteller, Gerätetyp und Modell, Kaufdatum und Seriennummer 320 erfasst werden.

Liegt die Seriennummer 320 des betroffenen Gerätes nicht vor, kann alternativ die Suche nach dem Namen des Geräteinhabers in Verbindung mit der Postleitzahl vorgesehen werden. Für diese Suche ist das Ausfüllen mehrerer Felder 317 erforderlich, da diese mit einem logischen "und" verknüpft sind. Der Start der Suche wird durch einem Auslösungsbutton 318 ausgelöst, der neben den jeweiligen Eingabefeldern angeordnet ist.

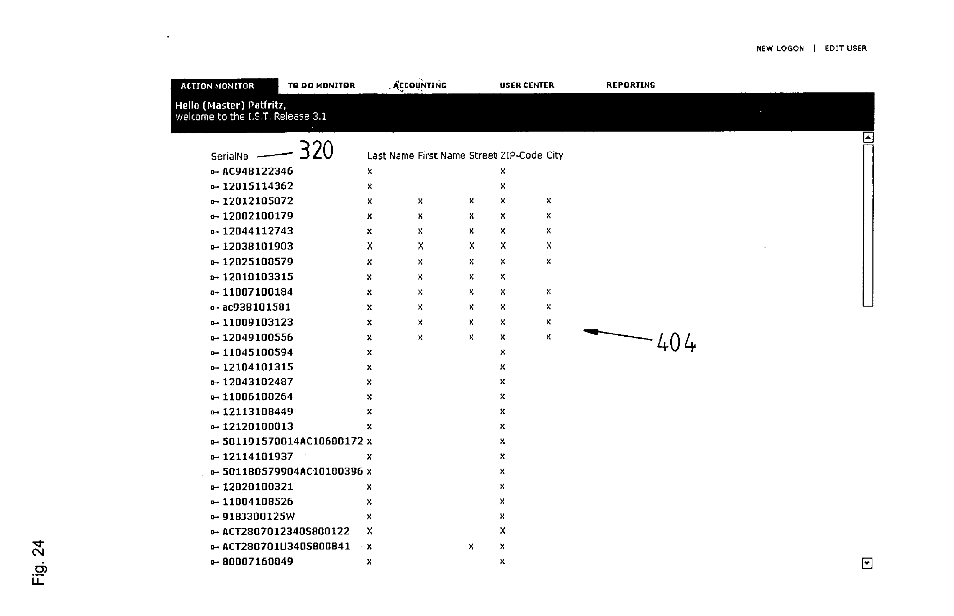

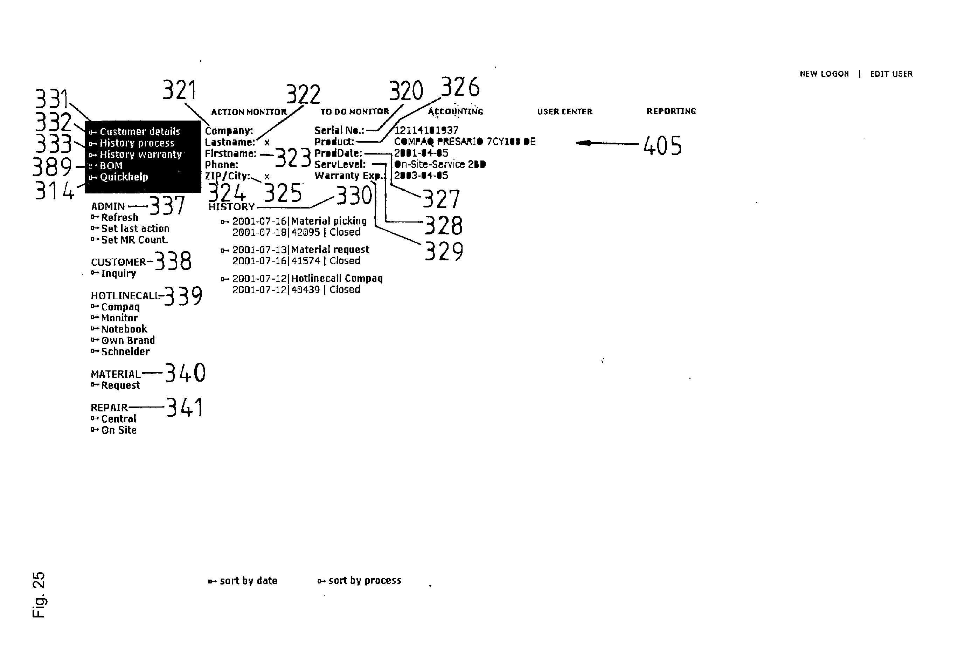

Die Ausgabe der mit der Suchanfrage nach einem Namen und einer Postleitzahl korrespondierenden Datensätze liefert eine nach Seriennummern 320 sortierte Liste aller auf diesen Namen erfassten Geräte, wie der Fig. 24 zu entnehmen ist, während die Suche nach der Seriennummer 320 eine eindeutige Zuordnung zu dem betreffenden Gerät liefert. Die Aufbereitung dieser Liste erfolgt in einer Stammdatenausgabemaske 404, die neben der Seriennummer 320 die mit dieser Seriennummer 320 verknüpften Adressdaten ausgibt. In der Stammdatenausgabemaske 404 ist die Seriennummer 320 als Link ausgeführt und erlaubt durch einen Mausklick auf diesen Link den Wechsel in eine detailliertere Darstellung der in der Datenbank hinterlegten Daten, wie in Fig. 25 dargestellt.

Für diese detaillierte Darstellung ist das Fenster in im wesentlichen fünf Bereiche unterteilt. Einen Bereich bildet eine Menüpunktleiste 405, die unterhalb des Karteireiters Prozessmonitor 315 ein Feld zur Darstellung von kundenspezifischen und produktspezifischen Informationen umfasst. Hier können unter anderem Angaben über den Firmennamen 321, den Nachnamen 322 des Kunden und dessen Vornamen 323, die Postleitzahl 324 und den Ort 325 sowie die Seriennummer 320, Produktname326, Herstellungsdatum 327, Servicelevel 328, und Ende der Gewährleistungsdauer 329, vorgesehen werden.

Ein weiterer Bereich Produkthistorientabelle 330 dient der Darstellung der Prozessablaufhistorie. In dieser Produkthistorientabelle 330 sind alle dieser Seriennummer 320 zugeordneten Prozesse bzw. im Rahmen eines Prozesses ausgelösten Aktionen aufgelistet, die in der Vergangenheit eröffnet, bearbeitet und ausgelöst wurden, bzw. die gegenwärtig noch in Bearbeitung sind. Weiterhin sind Bereiche mit Untermenüpunkten vorgesehen, die die Bearbeitung der Datensätze in dem Bereich der Menüpunktleiste 405 und der Produkthistorientabelle 330 erlauben. Diese genannten Bereiche grenzen an einen weiteren Bereich, der der Darstellung der zu bearbeitenden Daten dient.

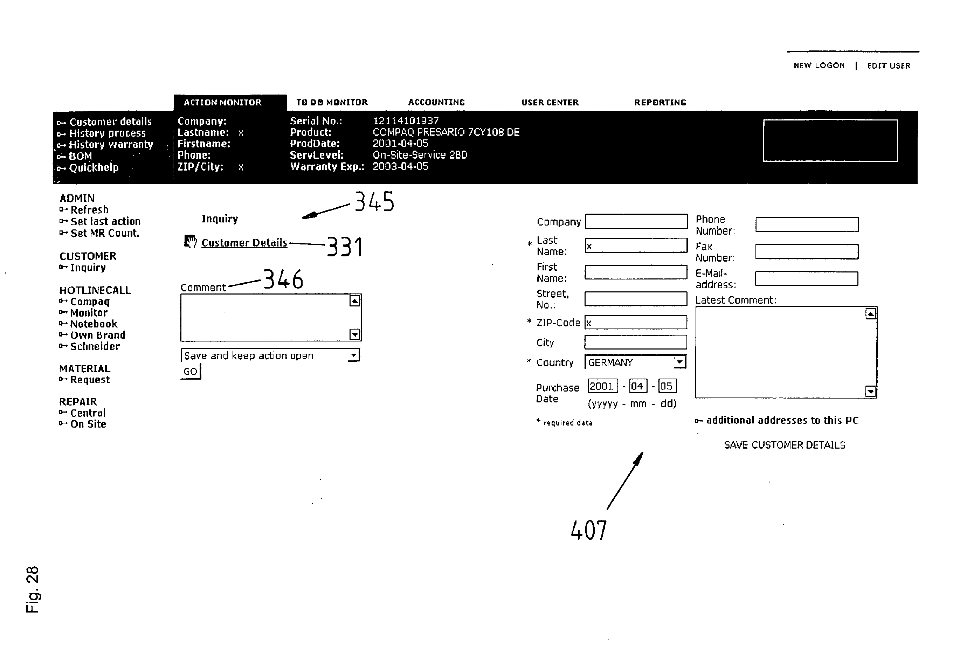

Die Daten, die unterhalb des Karteireiters der Hauptmenüleiste 319 aufgeführt sind, können durch Untermenüpunkte Kundendetails 331, Produkthistorienanzeigemenü 332, Garantiehistorie 333 und Stücklisteanzeige 389 bearbeitet werden. Alle Menü und Untermenüpunkte können als Link ausgeführt werden. Über den Untermenüpunkt Kundendetails 331 können alle kundenspezifischen Angaben in einer Maske Kundendetails 407 (Fig. 28) verändert und gespeichert werden.

Der Untermenüpunkt Produkthistorienanzeigemenü 332 listet alle einer Seriennummer 320 zugeordneten Prozesse auf. Ein Sortierkriterium für die Darstellung der Prozesse kann das Datum sein oder eine Bezeichnung für den ausgelösten Prozess. Jeder Eintrag in der in der Produkthistorientabelle 330 dargestellten Produkthistorie umfasst neben einem Erfassungsdatum des Prozesses eine fortlaufende Ordnungsnummer 335, die für jeden Prozess eindeutig ist. Weiterhin wird ein Status des jeweiligen Prozesses angezeigt.

Dem Untermenü der Garantiehistorie 333, können Angaben zu Herstellungsdatum 327, Kaufdatum 328 und Ende der Gewährleistung 329 entnommen werden. Das Datum des Endes der Gewährleistung 329 wird anhand des Kaufdatums 328 ermittelt. Weiterhin besteht hier die Möglichkeit zu verfolgen, welcher Anwender in Abhängigkeit von der ihm zugewiesenen Rolle, welche Änderungen im Rahmen eines Garantieprozesses vorgenommen hat. Eine Änderung, also ein Eingriff in den Garantieprozess, kann zum Ende des Gewährleistungszeitraumes erforderlich sein, wenn aufgrund bestimmter Umstände eine Verlängerung des Gewährleistungszeitraumes aus Kulanzgründen vorgesehen wird.

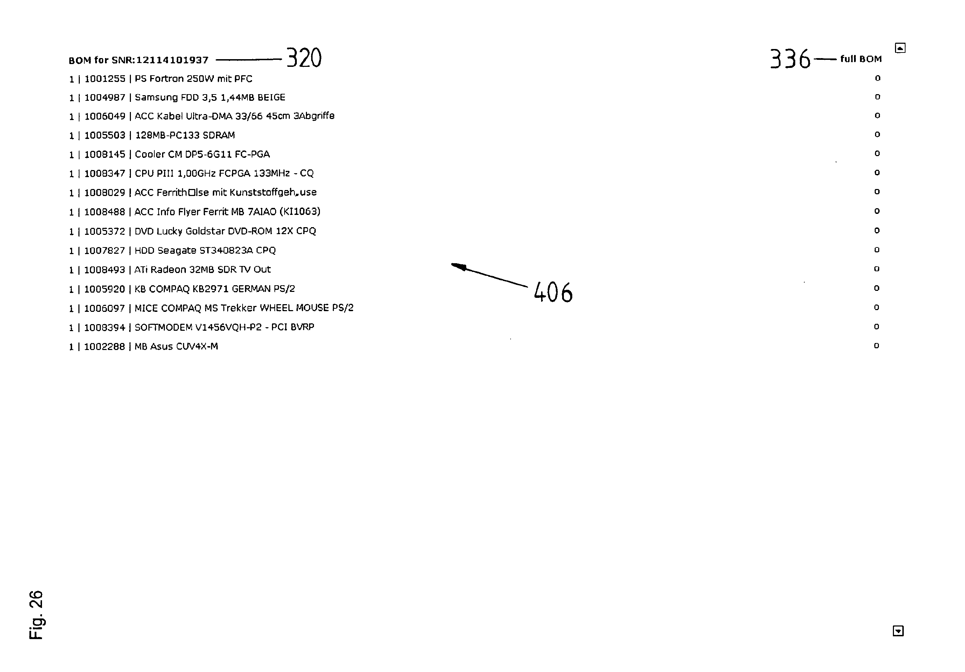

Die Auswahl des Untermenüpunktes Stücklistenanzeige 389 liefert in einem separaten Fenster 406 die Darstellung einer Komponentendatentabelle 334 für die entsprechende Seriennummer 320 (dargestellt in Fig. 26), umfassend eine Auflistung aller Bauteile, die in dem anhand der Seriennummer 320 identifizierten Gerät enthalten sind. Hierbei ist eine Kurzform der Darstellung der Komponentendatentabelle 334 vorgesehen, die die essentiellen Gerätedaten enthält, wobei wahlweise über einen Link 336 in diesem Fenster die Langform der Komponentendatentabelle 334 angezeigt werden kann, die alle Komponenten einschließlich der Software auflistet. Der Wechsel der Darstellung innerhalb des Fensters zurück zu der Kurzform der Komponentendatentabelle 334 ist über einen weiteren Link jederzeit möglich.

Ein Prozess lässt sich unter anderem über übergeordnete Menüpunkte Administration 337, Kunde 338, Hotlineanruf 339, Material 340 und Reparatur 341 auslösen. Das Menü Administrator 337 gliedert sich in mehrere als Link ausgeführte Untermenüpunkte. Der Zugang zu diesem Menü erfordert die Zuweisung einer Rolle mit maximalen Berechtigungen. Über einen Link "Setze Letzte Aktion" 342 ist es möglich, die gesamte einer Seriennummer 320 zugewiesene Historie auszublenden, nachdem z.B. das Gerät technisch vollständig, im Sinne einer Generalüberholung, überarbeitet wurde.

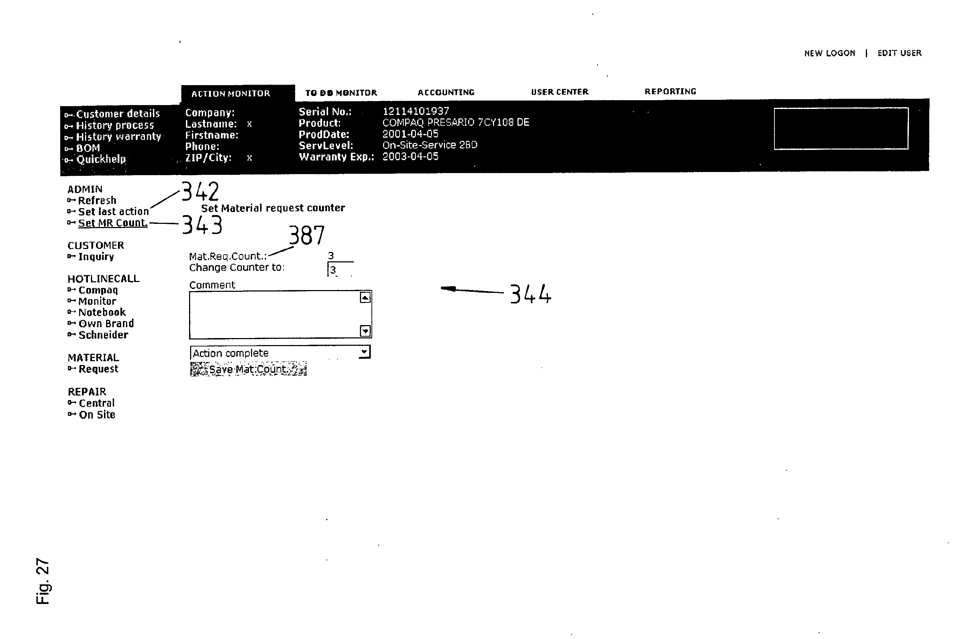

Ein Link "Setze Materialanforderungszähler" 343 führt zu einer Maske "Setzen eines Wertes eines Materialanforderungszählers "344, dargestellt in Fig. 27. In dieser Maske 344 lässt sich für jedes durch die Seriennummer 320 eindeutig bestimmte Gerät ein Wert "Anzahl von Materialanforderungen" 387 setzen. Ziel ist es zu vermeiden, dass für dasselbe Gerät eine beliebige Anzahl von Materialanforderungen durchgeführt werden. Sollte dennoch ein weiterer Tausch erforderlich sein, ist es erforderlich, dass der Materialanfordernde diesen Prozess zuvor begründet. Wird der gesetzte Wert für den Materialanforderungszähler 387 erreicht, besteht keine Möglichkeit eine weitere Materialanforderung auszulösen, bis der Wert des Materialanforderungszählers 387 für das betroffene Gerät erhöht wurde.

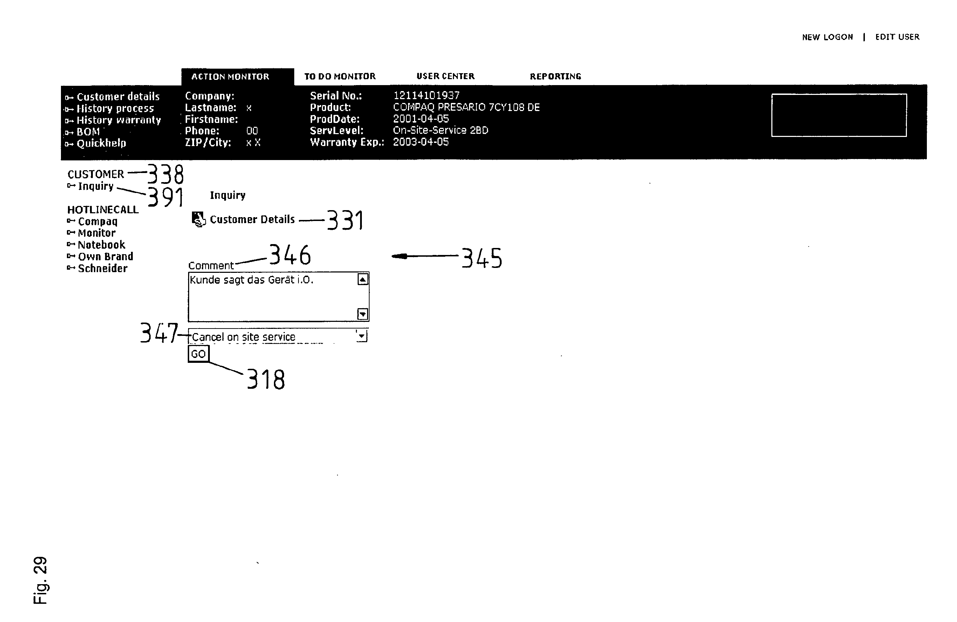

Ein Link "Rückfrage" 391 unterhalb des Menüpunkts Kunden 338 führt, wie in Fig. 28 dargestellt, zu einer Eingabemaske Rückfragen 345, die den Link Kundendetails 331, ein Freitextfeld Kommentar 346, und ein Drop-down Menü 347 umfasst. In dieser Maske können zusätzliche Informationen nach Rücksprache mit einem Kunden in dem Freitextfeld Kommentar 346 erfasst werden. Bei diesen Informationen kann es sich z.B. um Hinweise auf die Änderungen der Anschrift des Kunden handeln, die sofort über den Link Kundendetails 331 geändert und abgespeichert werden können, oder die Stornierung der Beauftragung zu einer Reparatur des Gerätes. Bei der Stornierung eines Prozesses, dargestellt in Fig. 29, kann die Auswahl der Art des zu stornierenden Prozesses über das Drop-down Menü 347 erfolgen, z.B. die Stornierung des Auftrags für einen vor Ort Einsatz durch einen Serviceprovider mit der Auswahl "Abbruch Vor Ort Service". Diese die Stornierung vorsehende Auswahl löst einen Folgeprozess mit der Bezeichnung "Prozessabbruch" aus, dessen Aufgabe darin besteht, nach Abschluss des Prozesses "Prozessabbruch" alle aus einer Beauftragung resultierenden Prozesse, wie z.B. eine ausgelöste Materialanforderung oder die Beauftragung eines Serviceproviders zu stornieren, einer Firma, die die im Rahmen der Gewährleistung erforderliche Reparaturen und / oder den Komponententausch durchführt bzw. die Abholung der zur Reparatur bestimmten Geräte. Um den Prozess "Prozessabbruch" abschließen zu können, sind besondere Berechtigungen erforderlich, da dieser Prozess weitreichende Auswirkungen auf die nachgelagerten Prozessabläufe hat.

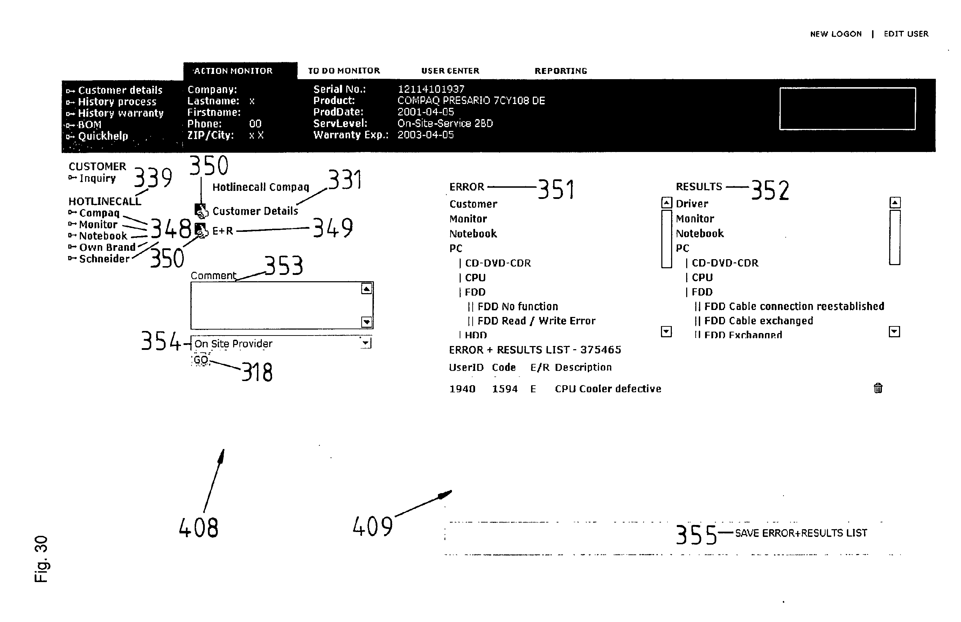

Angaben von Kunden, die ein Problem mit einem Gerät melden, können unter dem Menüpunkt Hotlineanruf 339 erfasst werden, wie in Fig. 30 dargestellt. Als Link ausgeführte Untermenüpunkte 348 können einer ersten Differenzierung der von einem Kunden gemeldeten Daten derart dienen, dass z.B. zwischen der Gattung des Gerätes, Monitor oder Notebook, und / oder dem Herstellers des Gerätes unterschieden werden kann. Nach erfolgter Auswahl eines Untermenüpunktes 348 durch den Anwender erscheint eine Maske 408, die in Fig. 30 dargestellt wird, in der als Titel die Bezeichnung des ausgelösten Prozesses wiedergegeben wird. Zudem kann die Maske 408 mindestens zwei Links umfassen, den Link Kundendetails 331, der auf die eingangs beschriebene Maske Kundendetails 407 verweist, und einen Link "E+R" 349. Den Links Kundendetails 331 und "E+R" 349 kann jeweils eine farbig unterlegte Hand 350, die unterschiedliche Formen annehmen kann, vorangestellt werden.

Der Link "E+R" 349 führt in eine Auswahlmaske "Error + Results" 409, Fehler und Lösungsvorschläge. Dem Anwender kann in dieser Maske 409 unter anderem eine Auswahl von Fehlerbildern 351 und eine Auswahl von Handlungsanweisungen 352, eine Auswahlliste an möglichen Fehlerursachen und korrespondierenden Lösungsvorschlägen zu dem jeweiligen Gerät bzw. der betreffenden Komponente präsentiert werden. Der Aufbau der Auswahlliste kann in Form einer Baumstruktur realisiert werden. Ausgehend von einer Gerätegattung wird über deren Einzelkomponenten immer feiner verzweigt, bis hin zu den einzelnen Fehlerursachen. Dies dient der Eingrenzung von möglichen Fehlerursachen. Analog ist der Aufbau der Lösungsvorschläge realisiert worden.

Die in den Listen Fehlerbildern 351 und / oder Handlungsanweisungen 352 getroffene Auswahl kann rückgängig gemacht werden, solange die gewählten Daten nicht über einen Betätigungsbutton 355 auf Datenbankebene zurückgeschrieben werden.

Unterhalb des Links 349 kann ein weiteres Freitextfeld Kommentar 353 vorgesehen sein, das zu der Eintragung zusätzlicher Informationen für diesen Prozess und der Kommentierung für den / die Bearbeiter dient, sowie ein Drop-down Menü 354, in welchem unterschiedliche Aktionen hinterlegt sind und ein Auslösungsbutton 318.

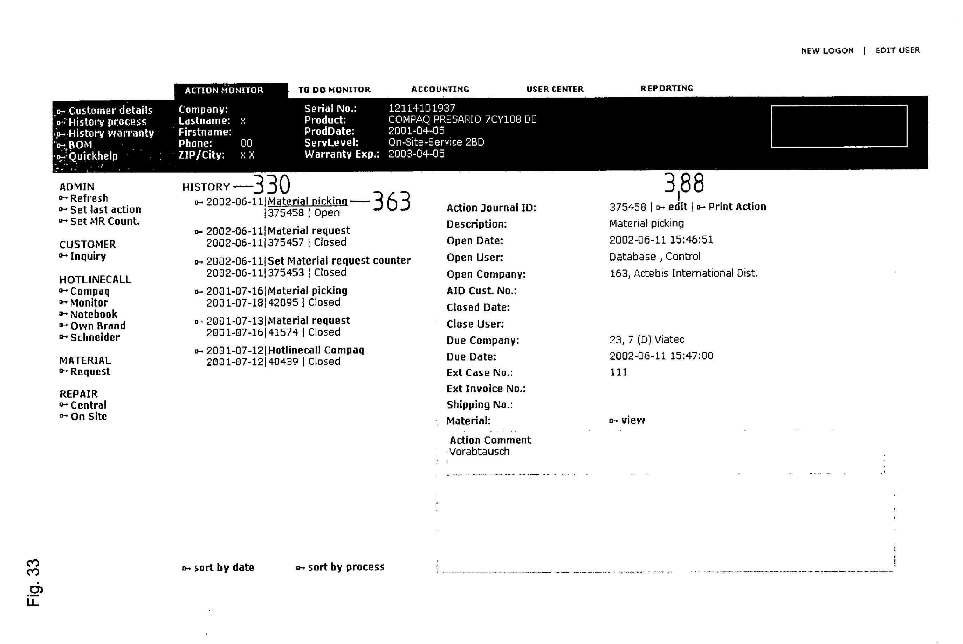

Die Auswahl des Drop-down Menüs 354 umfasst unter anderem Auswahlpunkte "Prozess zwischenspeichern", "Prozess löschen" und "Prozess vollständig". Mit der Auswahl "Prozess zwischenspeichern" können die bis zu diesem Zeitpunkt getätigten Eingaben zwischengespeichert werden, ein Folgeprozess wird nicht ausgelöst, der bestehende Prozess befindet sich im Status offen. Gleichzeitig kann bei der Auswahl von "Prozess zwischenspeichern" ein Warnhinweis erscheinen, dass die Daten nur zwischengespeichert wurden. Die abschließende Bearbeitung kann erfolgen, wenn dieser Prozess in der Produkthistorientabelle 330 erneut ausgewählt wird und man durch das Klicken mit der Maus auf einen Link "Bearbeiten" 388 (dargestellt in Fig. 33) in den Bearbeitungsmodus zurückkehrt.

Mit der Auswahl "Prozess löschen" können alle bis zu diesem Zeitpunkt getätigten Eingaben innerhalb des bearbeiteten Prozesses gelöscht werden, sofern es sich nicht um Folgeprozesse handelt, die auf einem Prozess beruhen, der mit "Prozess vollständig" abgeschlossen wurde, oder sich um einen Prozess handelt, der mit der Auswahl "Prozess vollständig" abgeschlossen wurde. Die Auswahl "Prozess vollständig" schließt die Erfassung und Eingabe der Daten ab und kann einen oder mehrere Folgeprozesse auslösen.

Ein mit "Prozess vollständig" abgeschlossener Prozess kann nicht mehr gelöscht werden, es besteht jedoch die Möglichkeit einen Prozess zu stornieren. D.h. der Prozess kann durch eine Auswahl "Prozess stoppen" angehalten werden. Dieser Eingriff in die Prozesskette ist nur mit einer entsprechenden Berechtigung möglich. Ein durch die Auswahl "Prozess stoppen" stornierter Prozess kann wieder zur weiteren Bearbeitung freigegeben werden. Die Auswahl zum Abschluss des bestehenden Prozesses und der Auslösung eines oder mehrerer Folgeprozesse durch "Prozess vollständig" im Drop-down Menü 354 steht in dem Drop-down Menü 354 erst zur Verfügung, wenn alle erforderlichen Eingaben getätigt wurden.

Die Prüfung der Eingaben kann im Rahmen einer Plausibilitätsprüfung erfolgen. Hierbei kann geprüft werden, ob alle Mussfelder in den einzelnen Masken ausgefüllt wurden. Nur bei einer positiven Überprüfung aller erforderlichen eingegebenen Daten ist es dem Anwender möglich über die Auswahl "Prozess vollständig" im Drop-down Menü 354 Folgeprozesse auszulösen.

Die farbig unterlegten Hände 350 sind Teil der Plausibilitätsprüfung und haben eine Ampelfunktion. Sie signalisieren dem Anwender in Abhängigkeit von der Farbe, Grün oder Rot, mit der die Hände 350 unterlegt sind und der Form der Hände 350, ein nach oben gerichteter Daumen oder gespreizte Finger, in wie weit noch Angaben zu den Kundendetails 331 oder zu "E+R" 349 erforderlich sind. Dies kann für die Kundendetails 331 erforderlich sein, wenn z.B. Adressangaben fehlen, die zur Abholung oder zum Austausch eines defekten Gerätes erforderlich sind. In der Maske "E+R" 409 kann dies erforderlich sein, wenn mögliche Fehlerursachen nicht ausgewählt wurden, die z.B. dem Techniker vor Ort die Fehleranalyse erleichtern sollen. Ist eine der beiden Hände 350 rot hinterlegt und wird die betreffende Hand 350 gespreizt dargestellt, ist die Auslösung eines Folgeprozesses nicht möglich, da nicht alle erforderlichen Angaben getätigt wurden.

Exemplarisch wird in Fig. 30 der Status der Prozessbearbeitung dargestellt, der die Vorstufe zur Auslösung eines Technikereinsatzes vor Ort ist. In dem Drop-down Menü 354 unterhalb eines Freitextfeldes Kommentar 353 wurde die Auswahl "Vor Ort Dienstleister" getätigt. Diese Auswahl sieht den Einsatz eines Technikers vor Ort vor. Durch die Betätigung des Betätigungsbuttons 318 werden die getätigten Eingaben an die Datenbank gesandt und dort gespeichert, sowie die dargestellten Angaben in dem Browserfensters aktualisiert.

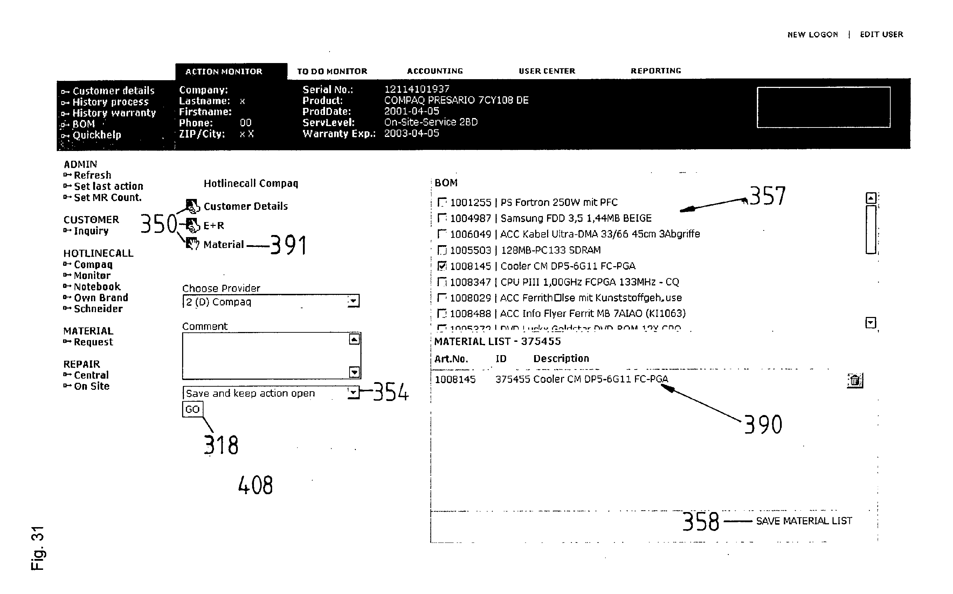

Die Aktualisierung des Browserfensters, dargestellt in Fig. 31, führt in diesem Fall zu einer um den Link "Material" 391 und um ein Drop-down Menü "Dienstleisterauswahl" 356 erweiterten Maske 408, der die Auswahl der in Frage kommenden Dienstleister zu entnehmen ist. Dem Link "Material" 391 ist ebenfalls eine farbig unterlegte Hand 350 vorangestellt. Die Auswahl des Links "Material" 391 eröffnet die Auswahlmaske Materialauswahltabelle 357, die alle Komponenten aus denen das betroffene Geräte besteht aufzeigt. Diese Materialauswahltabelle 357 wird anhand der Seriennummer 320 durch eine Datenbankabfrage ermittelt. Es ist eine Auswahl einer oder mehrerer Gerätekomponenten in dieser Maske 357 möglich.

Die ausgewählten Komponenten werden separat in einer Materialbestellliste 390 aufgelistet und können während des Auswahlvorganges jederzeit wieder abgewählt werden. Zum Abschließen der erforderlichen Auswahl wird ein Betätigungsbutton 358 betätigt. Mittels der Betätigung dieses Button 358 können alle aus der Materialauswahltabelle 357 ausgewählten, in der Materialbestellliste 390 aufgelisteten Materialien und Komponenten in der Datenbank abgespeichert werden. Im Anschluss daran wird der Datensatz des aktuellen Prozesses in der Datenbank aktualisiert und in dem Browserfenster erscheint die Hand 350 neben dem Link "Material" 391 grün unterlegt und in Form eines nach oben gerichteten Daumens.

In dem Drop-down Menü "Dienstleisterauswahl" 356 erscheint eine Liste der jeweils in Frage kommenden Dienstleister für diesen Auftrag. Mit der Auswahl eines Dienstleisters, einer Firma, die für bestimmte Gerätetypen die im Rahmen der Gewährleistung erforderlichen Reparaturen und den Komponentenaustausch durchführt bzw. die Abholung der zur Reparatur bestimmten Geräte, besteht nun die Möglichkeit den Prozess durch die Auswahl von "Prozess vollständig" in einem Drop-down Menü 354 abzuschließen.

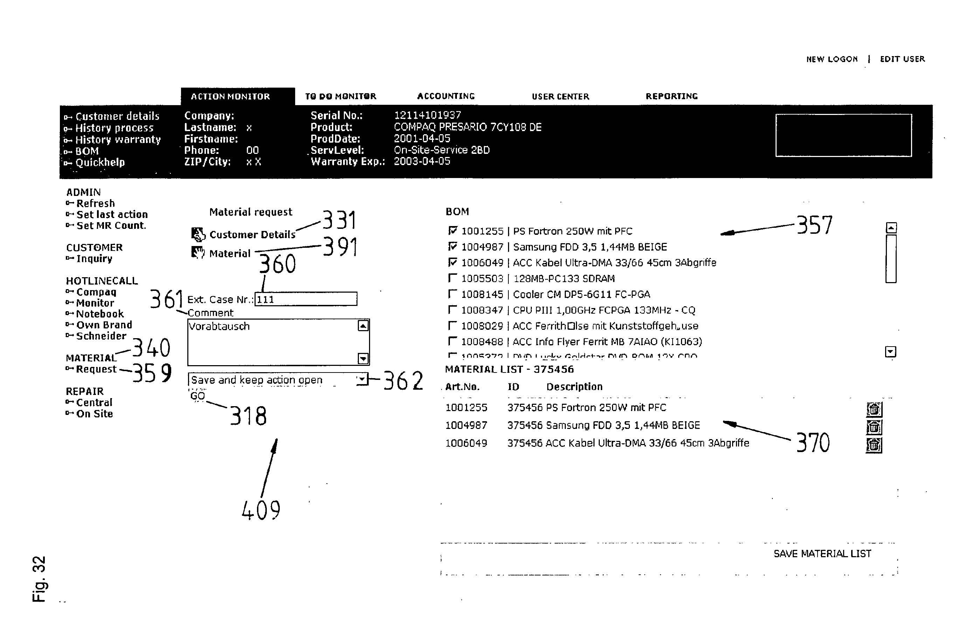

Der Menüpunkt "Material" 340 kann einen weiteren Link "Anforderung" 359 umfassen. Dieser Link 359 ermöglicht die Auslösung eines Prozesses zur Materialanforderung für den Austausch einer Komponente vorab. Eine Eingabemaske 409, die bei einer Auswahl dieses Links 359 erscheint wird in Fig. 32 dargestellt. Es kann neben den Mussangaben für die Kundendetails 331 und das Material 391 ein Feld Referenznummer 360 vorgesehen werden, welches dem Bearbeiter die Vergabe einer eigenen, frei wählbaren Referenznummer 360 ermöglicht. Ein weiteres Freitextfeld Kommentar 361 dient zur Kommentierung des Prozesses. Mit dem Abschluss des Prozesses durch die Auswahl "Prozess vollständig" aus einem vorgesehenen Drop-down Menü 362 und dem Betätigen des Auslösungsbutton 318 kann die Materialanforderung ausgelöst werden.

In der Produkthistorientabelle 330 kann automatisch für jede einzelne Anforderung eines Materials ein Prozess Materialaufnahme 363 erstellt werden, wie in Fig. 33 dargestellt. Der Prozess Materialaufnahme 363 kann die interne Unternehmensabteilung, den Zulieferer oder einen Dritten benachrichtigen, die mit der Materialbeschaffung und -bereitstellung beauftragt wurden. Werden durch einen materialanfordernden Prozess mehrere Komponenten für ein Gerät bestellt, so kann für jede einzelne Anforderung ein Prozess zur Benachrichtigung ausgelöst werden. Dies kann vor dem Hintergrund geschehen, dass die angeforderten Komponenten von unterschiedlichen Zulieferern beigestellt werden können und somit die Materialanforderungen den einzelnen Zulieferern eindeutig zuzuordnen sind. Diese Prozesse können bei Auftragserfassung abgeschlossen werden und es kann automatisch ein Folgeprozess "Material versendet", erzeugt werden.

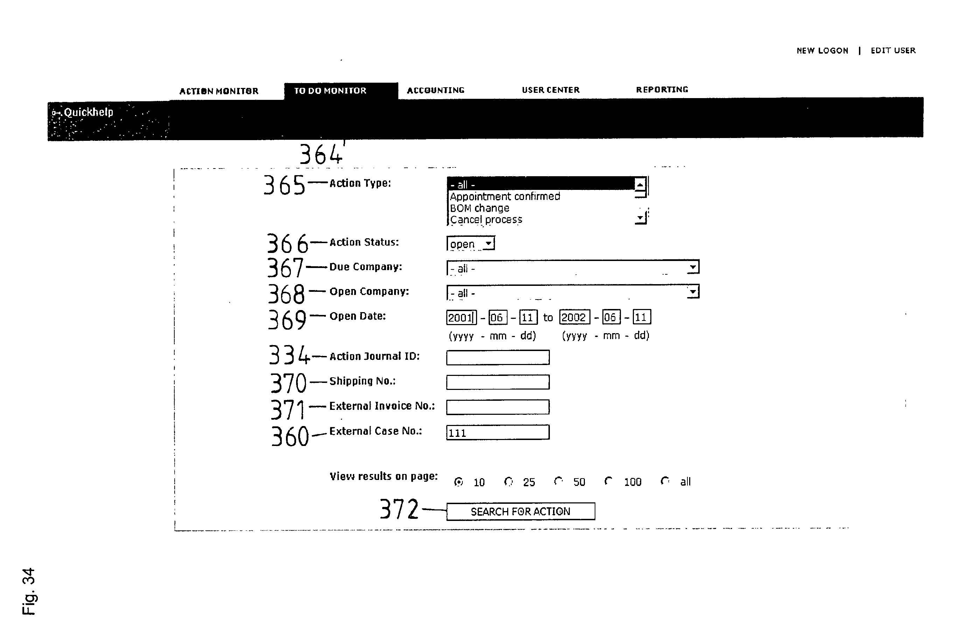

Die Dienstleister können ebenfalls über einen Zugang zu der Datenbank verfügen, z.B. über das WAN 304, um auf die ihnen zugeordneten Aufträge zugreifen zu können. Die Darstellung der Aufträge und deren Bearbeitungsstatus ist dem Dienstleister über einen Menüpunkt Auftragsübersicht 364 zugänglich. Die darzustellende Auswahl kann anhand von Auswahlfeldern beschränkt werden, wie in Fig. 34 dargestellt. Bei den Auswahlfeldern kann es sich um Prozessart 365, die Art des auszuführenden Auftrags, Prozessstatus 366, dem aktuellen Status des Auftrags, ausführende Firma 367, das den Auftrag ausführende Unternehmen, "Open Company" 368, das Unternehmen, welches den Auftrag ausgelöst hat, Eröffnungszeitraum 369, das den Zeitraum eingrenzt, in dem der Prozess ausgelöst wurde, die Ordnungsnummer 334 die jedem Prozess zugewiesen wird, eine Versandnummer 370, eine externe Rechnungsnummer 371 sowie die Referenznummer 360 handeln.

Die Felder Prozesstyp 365, Prozessstatus 366, ausführende Firma 367 und "Open Company" 368 können als Drop-down Menüs ausgeführt werden, während die Felder Ordnungsnummer 334, Versandnummer 370, externe Rechnungsnummer 371 und Referenznummer 360 als Freitextfelder ausgeführt werden können. Die Abfrage wird über einen Betätigungsbutton 372 ausgelöst.

Der Abschluss des Prozesses "Material versendet" kann bei Warenausgang die Hinterlegung der Versandnummer 370 vorsehen. Parallel dazu kann ein Prozess vorgesehen werden, der die so ausgelösten Warenbestandsänderungen in einer betriebswirtschaftliche Unternehmensabläufe abbildenden Software, die die Abläufe des für die Materialversendung verantwortlichen Unternehmens abbildet, verbuchen kann. Bei diesem Unternehmen kann es sich z.B. um den Hersteller des Gerätes handeln aber auch um einen Zuliefererbetrieb, der für den Zusammenbau des Gerätes erforderliche Komponenten an den Hersteller liefert oder einen Dienstleisters.

Das Abschließen eines Prozesses zur Erfassung eines aufgetretenen Problems mit einem Gerät, löst Folgeprozesse aus. Diese Folgeprozesse können z.B. einen Einsatz eines Technikers vor Ort vorsehen, den Austausch einer Gerätekomponente oder die Abholung eines Gerätes. Jeder dieser beispielhaft genannten Folgeprozess wird in der Produkthistorientabelle 330 abgebildet und erhält dort eine neue fortlaufende Ordnungsnummer 334.

Parallel hierzu können Prozesse ausgelöst werden, die z.B. eine Anforderung an die interne oder externe Materialbeschaffung oder die Benachrichtigung eines Dienstleisters über das Vorliegen eines Auftrages durch eine automatisch generierte E-Mail veranlassen und bei der Abholung des Gerätes über eine Schnittstelle in einer die betriebswirtschaftlichen Unternehmensabläufe abbildenden Software des materialliefernden Unternehmens eine Wareneingangsbuchung auslösen.

Ein weiterer Prozess, der parallel einsetzen kann, ist die Überwachung der Folgeprozesse, die einen Dienstleister beauftragen, tätig zu werden. An diese Überwachung kann ein hierachisch aufgebautes Mahnwesen gekoppelt sein. Nachdem einem Dienstleister ein Auftrag zugegangen ist, steht diesem ein definierter Zeitraum zur Verfügung, mit der Auftragsbearbeitung zu beginnen. Wird dieser zeitliche Rahmen überschritten, ohne dass ein Grund in der Historie des entsprechenden Prozesses eingetragen wird, erfolgt durch das Mahnwesen automatisch eine Benachrichtigung über diesen Umstand z.B. per E-Mail. Das Mahnwesen kann hierachisch aufgebaut werden, d.h. die erste Benachrichtigung wird an den für den betroffenen Prozess direkt verantwortlichen Mitarbeiter geleitet. Hierbei handelt es sich in der Regel um den Mitarbeiter, der den Prozess ausgelöst hat, bzw, dem der Folgeprozess zugewiesen wurde. Erfolgt daraufhin keine Bearbeitung des Prozesses durch den Mitarbeiter wird im Rahmen der nächsten Eskalationsstufe der direkte Vorgesetzte des Mitarbeiters per E-Mail informiert.

Der Dienstleister koordiniert auf Basis der ihm vorliegenden Daten die Terminabsprache mit den Kunden, den Technikereinsatz vor Ort und die dort durchzuführenden Maßnahmen oder die Abholung oder Bringung des Kundengerätes. Alle durch den Dienstleister ausgeführten Maßnahmen werden in dem jeweiligen Prozess erfasst und dokumentiert. So resultiert der Abschluss eines Prozesses "Vor Ort Terminabstimmung", d.h., die Terminabstimmung mit einem Kunden zur vor Ort Reparatur, durch die Auswahl "Prozess vollständig" in der Statusänderung des Prozesses der die Terminabstimmung zur Aufgabe hat von "offen" in "abgeschlossen" und löst einen automatisch einen Folgeprozess "Vor Ort Terminabstimmung erfolgt", d.h. Terminabstimmung zur vor Ort Reparatur mit dem Kunden ist erfolgt, mit dem Status "offen" aus. Wird dieser Prozess z.B. durch das Erscheinen des Technikers vor Ort beim Kunden und der Behebung des gemeldeten Problems ebenfalls abgeschlossen, wird ein weiterer Prozess automatisch generiert, "Vor Ort Reparatur abgeschlossen", d.h. die Reparatur vor Ort wurde abgeschlossen. Alle Aktivitäten werden in den jeweiligen Prozessen dokumentiert und als Informationen an den Folgeprozess übergeben.

Weiterhin können die Prozesse, die den Einsatz eines Dienstleisters auslösen, buchhalterisch in einem Menü Buchhaltung 381 erfasst werden. Über das Menü Buchhaltung 381 kann der Status abrechnungswürdiger Prozesse verwaltet werden.

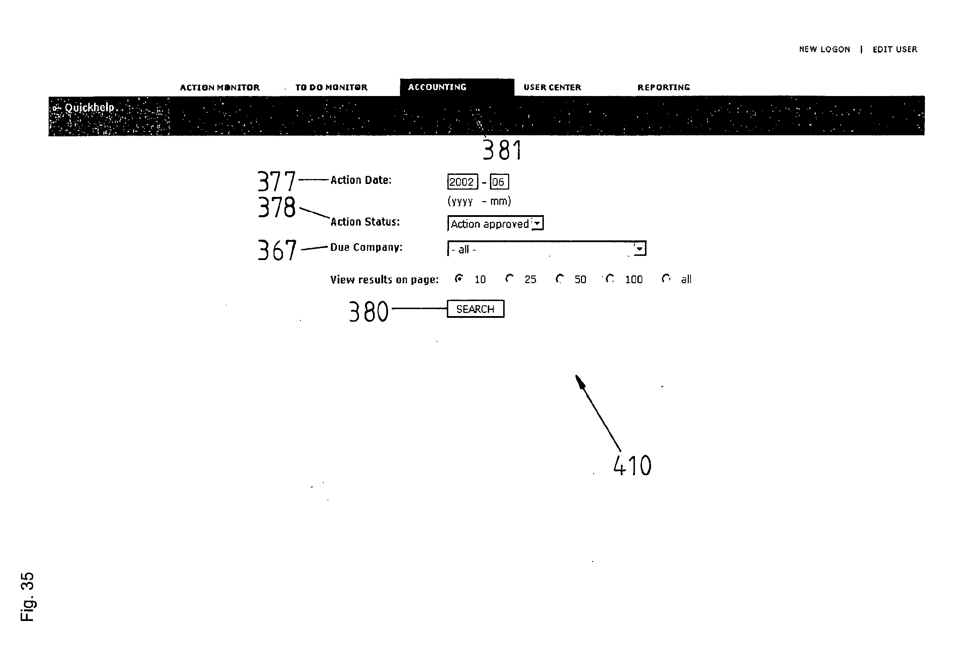

Die Eingabemaske 410 des Menüs Buchhaltung 381, dargestellt in Fig. 35, kann die Eingabefelder Prozessdatum 377, Prozessstatus 378 und ausführende Firma 367 umfassen. In dem Feld Prozessdatum 377 erfolgt die Angabe des Abrechnungszeitraums in Form von Jahr und Monat. Das Feld Prozessstatus 378 bietet eine Auswahlmöglichkeit in Form eines Drop-down Menüs an, bezogen auf einen Status, den ein abgeschlossener Auftrag annehmen kann. Vorgesehen sind hierbei ein Status "Prozess genehmigt", "Prozess abgeschlossen", "Prozess abgelehnt", "Rechungsstellung" und "Rechnungsauszahlung". Das Feld ausführende Firma 367 ist als Drop-down Menü ausgeführt und listet alle Dienstleister auf, deren Rechnungsdaten in der Datenbank erfasst werden. Die Datenbankabfrage anhand der gewählten Kriterien wird über einen Betätigungsbutton ausgelöst.

Ist für ein Gerät die im Rahmen des Prozesses Hotlineanruf 339 entstehende Prozesskette vollständig abgeschlossen, so wird im Menü Buchhaltung 381 ein Prozess mit einem Anfangsstatus "Prozess abgeschlossen" ausgelöst. Dieser Anfangstatus kann nach erfolgter Prüfung auf den Status "Prozess genehmigt" oder "Prozess abgelehnt" gesetzt werden. Eine Prüfung der Prozesskette kann jederzeit durch ein Verzweigen über die als Link ausgeführte Ordnungsnummer 334 in die Produkthistorientabelle 330 des Gerätes erfolgen.

In dem Fall, dass der Prozess von seinem Anfangsstatus "Prozess abgeschlossen" auf den Status "Prozess genehmigt" gesetzt wird, bedeutet dies, dass die Prozesskette vollständig und korrekt abgeschlossen wurde, in dem Fall, dass der Status auf "Prozess abgelehnt" gesetzt wird, bedeutet dies eine Zurückweisung des abrechnungswürdigen Prozess. Auf den Status "Prozess genehmigt" folgt der Status "Rechnungsstellung", d.h. die eingereichte Rechnung z.B. des Dienstleisters steht zur Auszahlung an. Abgeschlossen wird dieser Prozess im Menü Buchhaltung 381 durch den Status "Rechnungszahlung", d.h. die Zahlung kann erfolgen.

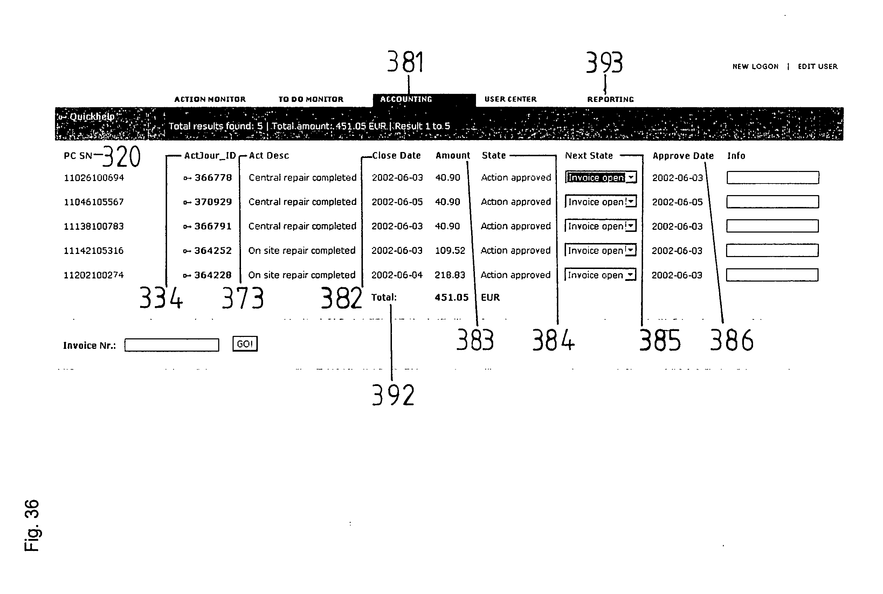

Die exemplarisch in Fig. 36 dargestellte Ausgabe einer solchen Abfrage listet alle Vorgänge in tabellarischer Form auf, die absteigend nach ihrer Ordnungsnummer 334 sortiert dargestellt werden können. Die tabellarische Darstellung kann unter anderem eine Spalte Seriennummer 320 des Gerätes, eine Spalte, die die fortlaufende Ordnungsnummer 334 eines Prozesses wiedergibt, eine Spalte Prozessbeschreibung 373 und eine Spalte Abschlussdatum 382 des Prozesses der zur Abrechnungswürdigkeit führte, umfassen. Des weiteren kann eine Spalte Betrag 383, in welcher der abzurechnende Betrag für jeden abrechnungswürdigen Prozess aufgelistet wird, eine Spalte Status 384, die den Status des jeweiligen abrechnungswürdigen Prozesses darstellt, eine Spalte Folgestatus 385, die als Drop-down Menü ausgeführt sein kann, das die Auswahl eines Folgestatus für den jeweiligen abrechnungswürdigen Prozess in Abhängigkeit von dem Status in der Spalte Status 384 ermöglicht, und eine Spalte Genehmigungsdatum 386, das Genehmigungsdatum des Prozesses, vorgesehen werden.

Des weiteren kann die Darstellung des Gesamtbetrages 393 der aufgelisteten abrechnungswürdigen Prozesse vorgesehen werden, die auf der Basis der in der Datenbank gespeicherten Daten berechnet werden können. Hierzu kann die Berechnung z.B. für einen oder alle Dienstleister erfolgen, wobei außerdem nach dem Status, d.h. z.B. ob eine Rechnung genehmigt oder zurückgewiesen wurde, des abrechnungswürdigen Prozesses unterschieden werden kann.

Die Stornierung eines Prozesses, durch den ein Dienstleister beauftragt wurde, wie es in dem Prozessmonitor 315 unter dem Menüpunkt Rückfragen 345 vorgenommen werden kann, löst parallel einen Prozess aus, der den Status des in dem Menü Buchhaltung 381 erfassten Abrechnungsposten ändert.

Eine weitere Aufgabe des erfindungsgemäßen Verfahrens ist die Möglichkeit der Auswertung, erreichbar über einen Menüpunkt Auswertung 393. Das Menü Auswertung 393 umfasst eine Vielzahl von Kriterien, die zur Auswertung und Analyse auf der Basis der dokumentierten Prozesse herangezogen werden können. Diese Auswertungen können ein vorhandenes Qualitätsmanagement unterstützen, indem aufgrund der Vielzahl der erfassten Daten Informationen sowohl über das Gerät als solches, aber auch die betroffenen Unternehmensteile, Dienstleister, Zulieferer oder das Kundenverhalten ableitbar sind.

## Patentansprüche

1. Verfahren zur Erfassung und Darstellung der Produkthistorie eines aus mindestens einer Komponente bestehenden Gerätes, **gekennzeichnet durch** folgende Verfahrensschritte:
a) Einbringung von Kundeninformationen in eine Datenbank und Speicherung der Kundeninformationen in der Datenbank auf einem Datenbankserver (200 / 300) über ein Netzwerk (202);
b) Einbringung von Komponenteninformationen des Gerätes in die Datenbank und Speicherung der Komponenteninformationen in der Datenbank auf dem Datenbankserver (200 / 300) über ein Netzwerk (202);
c) Zuordnung der Komponenteninformationen zu den Kundeninformation und/oder Zuordnung der Kundeninformationen zu den Komponenteninformationen;
d) Aufrufen der Kunden- und/oder Komponenteninformationen bezüglich des Geräts auf einem Client (201 / 301) des Netzwerks (202);
e) Einbringung von die Produkthistorie des Gerätes betreffenden Informationen auf dem Client (201 / 301) des Netzwerks (202) und Verknüpfung mit den aufgerufenen Kunden- und/oder Komponenteninformationen;
f) Rückschreiben des gesamten Datensatzes betreffend die Kundendaten, Komponentendaten und Produkthistoriendaten in die Datenbank auf dem Datenbankserver (200 / 300) über das Netzwerk (202).

2. Verfahren nach Anspruch 1, **dadurch gekennzeichnet, dass** die Produkthistorie des Gerätes in einer Produkthistorientabelle (5 / 330) dargestellt werden kann.

3. Verfahren nach Anspruch 2, **dadurch gekennzeichnet, dass** mindestens ein Prozess ausgewählt werden kann, wobei der mindestens eine Prozess in der Produkthistorietabelle (5 / 330) dokumentiert wird.

4. Verfahren nach Anspruch 3, **dadurch gekennzeichnet, dass** der mindestens eine Prozess mindestens eine Aktion auslösen kann.

5. Verfahren nach Anspruch 4, **dadurch gekennzeichnet, dass** es sich bei der mindestens einen auswählbaren Aktion um eine Materialanforderung oder eine Reparaturanweisung handelt.

6. Verfahren nach Anspruch 5, **dadurch gekennzeichnet, dass** für die Materialanforderung eine Materialauswahltabelle (94 / 357) aus einer Komponentendatentabelle (4 / 334) erzeugt wird, in welcher die einzelnen Komponenten über zugeordnete Auswahlfelder (95) angewählt werden und in die Materialauswahltabelle (94 / 357) übertragen werden.

7. Verfahren nach Anspruch 6, **dadurch gekennzeichnet, dass** nach erfolgter Auswahl der Komponenten aus der Materialauswahltabelle (94 / 357) eine gesamte Materialbestellliste (104 / 390) angezeigt wird, welche an eine Materialbeschaffungsstelle übermittelt werden kann und in die Produkthistorientabelle (5 / 330) übernommen wird.

8. Verfahren nach Anspruch 5, **dadurch gekennzeichnet, dass** die Reparaturanweisung durch Auswahl eines Fehlerbildes (6 / 351) aus einem Fehlermenü (9) und einer korrespondierenden Handlungsanweisung (7 / 352) aus einem Handlungsanweisungsmenü (10) spezifiziert werden kann.

9. Verfahren nach Anspruch 8, **dadurch gekennzeichnet, dass** die Reparaturanweisung mit Fehlerbild (6 / 351) und korrespondierender Handlungsanweisung (7 / 352) der Produkthistorientabelle (5 / 330) zugefügt wird und an eine Reparaturabteilung weitergeleitet wird.

10. Verfahren nach einem der Ansprüche 2 bis 9, **dadurch gekennzeichnet, dass** das Gerät vermittels mindestens eines Kennzeichens identifizierbar ist.

11. Verfahren nach Anspruch 10, **dadurch gekennzeichnet, dass** es sich bei dem Kennzeichen um die Seriennummer (320) des Gerätes handelt.

12. Verfahren nach einem der Ansprüche 10 oder 11, **dadurch gekennzeichnet, dass** eine Zuordnung der Prozesse und / oder Aktionen zu dem Gerät über das Kennzeichen erfolgt.

13. Verfahren nach einem der Ansprüche 1 bis 12, **dadurch gekennzeichnet, dass** es sich bei dem Gerät um einen Personal Computer und / oder an diesen angeschlossene Peripheriegeräte handelt, insbesondere Drucker, Scanner, Monitor, Modem, externe Speichermedien.

14. Vorrichtung für ein Verfahren nach den Ansprüchen 1 bis 13 zur Erfassung und Darstellung der Produkthistorie eines aus Komponenten hergestellten Geräts umfassend mindestens einen Datenbankserver (200 / 300) zur Bereitstellung einer Datenbank, sowie mindestens einen Client (201 / 301), der über ein Netzwerk (202) mit dem Datenbankserver (200 / 300) verbunden ist, **dadurch gekennzeichnet, dass** ein Verfahren nach einem der Ansprüche 1 bis 12 auf der Vorrichtung durchgeführt wird.

15. Vorrichtung nach Anspruch 14, **dadurch gekennzeichnet, dass** es sich bei dem Netzwerk (202) um eine Local Area Network (302) und / oder ein Wide Area Network (304) oder ein Internet handelt.

16. Vorrichtung nach einem der Ansprüche 14 oder 15, **dadurch gekennzeichnet, dass** es sich bei den Clients (201 / 301) um Personal-Computer handelt, wobei vorzugsweise mindestens ein skriptfähiger Browser vorgesehen ist.

17. Vorrichtung nach einem der Ansprüche 14 bis 16, **dadurch gekennzeichnet, dass** zur Kommunikation über das Netzwerk (202) ein Verschlüsselungsalgorithmus verwendet wird.

18. Computerprogramm mit Programmcodemitteln, um alle Schritte von jedem beliebigen der Ansprüche 1 bis 13 durchzuführen, wenn das Programm auf einer Vorrichtung nach einem der Ansprüche 14 bis 17 durchgeführt wird.
